# EUROPEAN PATENT SPECIFICATION

(11) **EP 2 770 664 B1**
(45) Date of publication and mention of the grant of the patent: **13.04.2016**
(21) Application number: 12884347.1
(22) Date of filing: 28.12.2012
(51) Int. Cl.: G06F 1/26, H04L 12/10, H04L 12/413

(54) **ETHERNET POWER SUPPLY METHOD, APPARATUS AND SYSTEM.**
ETHERNET-STROMVERSORGUNGSVERFAHREN, GERÄT UND SYSTEM.
PROCÉDÉ, DISPOSITIF ET SYSTÈME D'ALIMENTATION EN ÉNERGIE ETHERNET.

(43) Date of publication of application: 27.08.2014
(73) Proprietor: Huawei Technologies Co., Ltd., Longgang District Shenzhen, Guangdong 518129 (CN)
(72) Inventor: HUA, Rui, Shenzhen Guangdong 518129 (CN); GU, Ying, Shenzhen Guangdong 518129 (CN); HE, Zhangqing, Shenzhen Guangdong 518129 (CN); YANG, Jianguang, Shenzhen Guangdong 518129 (CN); CAO, Tongqiang, Shenzhen Guangdong 518129 (CN); HUANG, Anhu, Shenzhen Guangdong 518129 (CN)
(74) Representative: Gill Jennings & Every LLP
(86) International application number: PCT/CN2012/087846
(87) International publication number: WO 2014/101110

(56) References cited:
- CN-A- 101 707 380
- CN-A- 101 820 348
- CN-A- 101 826 970
- US-A1- 2009 299 538
- US-A1- 2010 106 985
- US-A1- 2010 171 602

## Description

### TECHNICAL FIELD

The present invention relates to the field of communications technologies, and in particular, to a power over Ethernet method, apparatus, device, and system.

### BACKGROUND

Power over Ethernet (English: Power over Ethernet, abbreviation: PoE) devices are classified into power sourcing equipments (English: power sourcing equipment, abbreviation: PSE) and powered devices (English: power device, abbreviation: PD). A power sourcing equipment supplies power to a powered device through an Ethernet cable. Generally, a PSE can provide a maximum power of 30 W for a single PD. In recent years, as a cloud technology develops, increasing types of devices, such as a cloud terminal, a high definition camera, and a notebook computer, support a remote power supply application. Power requirements of these devices may be greater than 30 watts (English: watt, symbol: W), and may even reach 60 W or 90 W. After a high-power PD device is connected to a power over Ethernet system, a PSE may be overloaded, or use of multiple low-power PD devices is affected.

Document D1 (US 20100171602 A1) describes a management agent which has access to power output control circuitry of a digital electronic communication switch, a power meter, a load sharing means, and the ability to manage the power of switching circuits in the switch. The power meter enables the management agent to identify the power consumed by the switching circuits that are enabled and operational. This information, coupled with (1) knowledge of the power allocated to each port via PoE, and (2) policy information (which specifies power allocation preferences) is used in a two-pass power management method.

Document D2 (US 20090299538 A1) realizes a power source redundancy of each of devices constructing a network while suppressing a processing load of each device with a simplified configuration. A power monitoring device includes a power configuration generator for preparing power control information based upon device information including necessary power information, being information indicative of a power necessary for operating each monitored device itself, and power status information indicative of a received power in each monitored device, causing a power configuration information storage to store the prepared power control information, and further transmitting the prepared power control information to each monitored device. Further, the monitored device includes a power controller for controlling the power of its own device based upon the transmitted power control information.

### SUMMARY

The present invention provides a power over Ethernet method, apparatus, device, and system, so as to reduce an effect of a high-power Ethernet powered device on a low-power Ethernet powered device.

In a first aspect, the present invention provides a power over Ethernet method, including:
when a power supply mode of an Ethernet power sourcing equipment is a first power supply mode, determining, a high-power Ethernet powered device and a low-power Ethernet powered device among Ethernet powered devices connected to the Ethernet power sourcing equipment and whose power are supplied by the Ethernet power sourcing equipment, wherein the high-power Ethernet powered device is an Ethernet powered device whose power requirement is greater than a set value, the low-power Ethernet powered device is an Ethernet powered device whose power requirement is less than or equal to the set value;
setting a power supply priority of the high-power Ethernet powered device to a lowest priority, wherein the power supply priority of the high-power Ethernet powered device is lower than a lowest priority that can be set for the low-power Ethernet powered device;
when a new Ethernet powered device is connected to the Ethernet power sourcing equipment, determining a power supply priority of the new Ethernet powered device according to the power supply mode of the Ethernet power sourcing equipment and a power requirement of the new Ethernet powered device; and
determining, according to a used power of the Ethernet power sourcing equipment, power supply priorities of the Ethernet powered devices, the power supply priority of the new Ethernet powered device, and a maximum output power of the Ethernet power sourcing equipment, whether the Ethernet power sourcing equipment supplies power to the new Ethernet powered device.

In a first implementation manner of the first aspect, the determining whether the Ethernet power sourcing equipment supplies power to the new Ethernet powered device includes:
acquiring a current working state of the Ethernet power sourcing equipment according to the maximum output power of the Ethernet power sourcing equipment, a first preset power threshold, and the used power of the Ethernet power sourcing equipment; and
when the current working state is a high-load state and if the power supply priority of the new Ethernet powered device is higher than a power supply priority of an Ethernet powered device with a lowest power supply priority among the Ethernet powered devices, determining that the Ethernet power sourcing equipment supplies power to the new Ethernet powered device, and determining that the Ethernet power sourcing equipment stops supplying power to the Ethernet powered device with the lowest power supply priority among the Ethernet powered devices.

In a second implementation manner of the first aspect, the determining whether the Ethernet power sourcing equipment supplies power to the new Ethernet powered device includes:
acquiring a current working state of the Ethernet power sourcing equipment according to the maximum output power of the Ethernet power sourcing equipment, a first preset power threshold, and the used power of the Ethernet power sourcing equipment; and
when the current working state is an overload state, determining that the Ethernet power sourcing equipment stops supplying power to an Ethernet powered device with a lowest power supply priority among the Ethernet powered devices, and forbidding supplying power again to the Ethernet powered device whose power is stopped being supplied.

In a second aspect, the present invention provides a power over Ethernet apparatus, including a setting module and a determining module, where:
when a power supply mode of an Ethernet power sourcing equipment is a first power supply mode,
the determining module is configured to determine a high-power Ethernet powered device and a low-power Ethernet powered device among Ethernet powered devices connected to the Ethernet power sourcing equipment and whose power are supplied by the Ethernet power sourcing equipment, wherein the high-power Ethernet powered device is an Ethernet powered device whose power requirement is greater than a set value, the low-power Ethernet powered device is an Ethernet powered device whose power requirement is less than or equal to the set value;
the setting module is configured to, set a power supply priority of the high-power Ethernet powered device to a lowest priority, wherein the power supply priority of the high-power Ethernet powered device is lower than a lowest priority that can be set for the low-power Ethernet powered device;
the setting module is further configured to, when a new Ethernet powered device is connected to the Ethernet power sourcing equipment, determine a power supply priority of the new Ethernet powered device according to the power supply mode of the Ethernet power sourcing equipment and a power requirement of the new Ethernet powered device; and
the determining module is further configured to determine, according to a used power of the Ethernet power sourcing equipment, power supply priorities of the Ethernet powered devices, the power supply priority of the new Ethernet powered device, and a maximum output power of the Ethernet power sourcing equipment, whether the Ethernet power sourcing equipment supplies power to the new Ethernet powered device.

In a first implementation manner of the second aspect, the determining module is specifically configured to acquire a current working state of the Ethernet power sourcing equipment according to the maximum output power of the Ethernet power sourcing equipment, a first preset power threshold, and the used power of the Ethernet power sourcing equipment; and when the current working state is a high-load state and if the power supply priority of the new Ethernet powered device is higher than a power supply priority of an Ethernet powered device with a lowest power supply priority among the Ethernet powered devices, determine that the Ethernet power sourcing equipment supplies power to the new Ethernet powered device, and determine that the Ethernet power sourcing equipment stops supplying power to the Ethernet powered device with the lowest power supply priority among the Ethernet powered devices.

In a second implementation manner of the second aspect, the determining module is specifically configured to acquire a current working state of the Ethernet power sourcing equipment according to the maximum output power of the Ethernet power sourcing equipment, a first preset power threshold, and the used power of the Ethernet power sourcing equipment; and when the current working state is an overload state, determine that the Ethernet power sourcing equipment stops supplying power to an Ethernet powered device with a lowest power supply priority among the Ethernet powered devices, and forbid supplying power again to the Ethernet powered device whose power is stopped being supplied.

In a third aspect, the present invention provides an Ethernet power sourcing equipment, including an Ethernet port, a power supply circuit, and a processor, where:
the power supply circuit is connected to the Ethernet port;
the power supply circuit is connected to the processor;
when a power supply mode of an Ethernet power sourcing equipment is a first power supply mode,
the processor determines a high-power Ethernet powered device and a low-power Ethernet powered device among Ethernet powered devices connected to the Ethernet power sourcing equipment and whose power are supplied by the Ethernet power sourcing equipment, wherein the high-power Ethernet powered device is an Ethernet powered device whose power requirement is greater than a set value, the low-power Ethernet powered device is an Ethernet powered device whose power requirement is less than or equal to the set value;
the processor sets a power supply priority of the high-power Ethernet powered device to a lowest priority, wherein the power supply priority of the high-power Ethernet powered device is lower than a lowest priority that can be set for the low-power Ethernet powered device;
when a new Ethernet powered device is connected to the Ethernet power sourcing equipment, a power requirement testing circuit determines a power requirement of the new Ethernet powered device;
the processor determines a power supply priority of the new Ethernet powered device according to the power supply mode of the Ethernet power sourcing equipment and the power requirement of the new Ethernet powered device; and
the processor determines, according to a used power of the Ethernet power sourcing equipment, power supply priorities of the Ethernet powered device, the power supply priority of the new Ethernet powered device, and a maximum output power of the Ethernet power sourcing equipment, whether the power supply circuit supplies power to the new Ethernet powered device.

In a first implementation manner of the third aspect, the Ethernet power sourcing equipment further includes a power supply mode switching key;
the power supply mode switching key is connected to the processor; and
the power supply mode switching key is configured to switch the power supply mode of the Ethernet power sourcing equipment from the first power supply mode to a second power supply mode, and switch the power supply mode of the Ethernet power sourcing equipment from the second power supply mode to the first power supply mode.

In a second implementation manner of the third aspect, the processor determines whether the power supply circuit supplies power to the new Ethernet powered device, which includes:
the processor acquires a current working state of the Ethernet power sourcing equipment according to the maximum output power of the Ethernet power sourcing equipment, a first preset power threshold, and the used power of the Ethernet power sourcing equipment; and
when the current working state is a high-load state and if the power supply priority of the new Ethernet powered device is higher than a power supply priority of an Ethernet powered device with a lowest power supply priority among the Ethernet powered devices, the processor determines that the power supply circuit supplies power to the new Ethernet powered device, and determines that the power supply circuit stops supplying power to the Ethernet powered device with the lowest power supply priority among the Ethernet powered devices.

In a third implementation manner of the third aspect, the processor determines whether the power supply circuit supplies power to the new Ethernet powered device, which includes:
the processor acquires a current working state of the Ethernet power sourcing equipment according to the maximum output power of the Ethernet power sourcing equipment, a first preset power threshold, and the used power of the Ethernet power sourcing equipment; and
when the current working state is an overload state, the processor determines that the power supply circuit stops supplying power to an Ethernet powered device with a lowest power supply priority among the Ethernet powered devices, and forbids the power supply circuit to supply power again to the Ethernet powered device whose power is stopped being supplied.

In a fourth aspect, the present invention provides a power over Ethernet system, including an Ethernet power sourcing equipment and an Ethernet powered device, where the Ethernet power sourcing equipment is the Ethernet power sourcing equipment according to the third aspect or any one of the implementation manners of the third aspect, and the Ethernet powered device is connected to the Ethernet power sourcing equipment through an Ethernet port of the Ethernet power sourcing equipment.

It can be seen from the foregoing technical solutions that, in a first power supply mode, a power supply priority of a high-power Ethernet powered device in the present invention is set to a lowest priority, thereby reducing an effect of a high-power Ethernet powered device on a low-power Ethernet powered device.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a power over Ethernet method according to an embodiment of the present invention;
FIG. 2 is a schematic diagram of a power over Ethernet apparatus according to an embodiment of the present invention; and
FIG. 3 is a schematic diagram of an Ethernet power sourcing equipment according to an embodiment of the present invention.

### DESCRIPTION OF EMBODIMENTS

The following gives an exemplary description of a specific implementation process of the present invention with reference to embodiments. Apparently, the embodiments to be described are a part rather than all of the embodiments of the present invention.

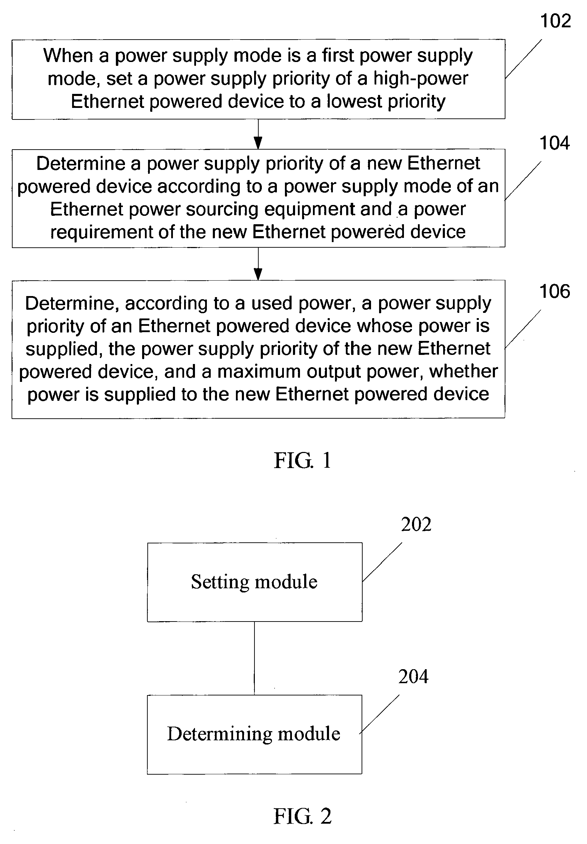

FIG. 1 is a flowchart of a power over Ethernet method according to an embodiment of the present invention. The method includes:

102. When a power supply mode of an Ethernet power sourcing equipment is a first power supply mode, a power over Ethernet apparatus sets a power supply priority of a high-power Ethernet powered device whose power is supplied by the Ethernet power sourcing equipment to a lowest priority, where the high-power Ethernet powered device is an Ethernet powered device whose power requirement is greater than a set value.

The power over Ethernet apparatus may be implemented by an independent apparatus such as a server that is connected to an Ethernet power sourcing equipment; or the power over Ethernet apparatus may be integrated into an Ethernet power sourcing equipment, and the power over Ethernet apparatus is implemented by the Ethernet power sourcing equipment. The Ethernet power sourcing equipment in this embodiment of the present invention is a PSE and may specifically be a network switch or a router that supports PoE. The Ethernet powered device in this embodiment of the present invention is a PD and may specifically be an Internet protocol camera (English: Internet protocol camera, IP camera for short), an voice over Internet protocol phone (English: voice over Internet Protocol phone, VoIP phone for short), a wireless access point (English: access point, abbreviation: AP), a network-attached storage (English: network-attached storage, abbreviation: NAS), or a thin client (English: thin client) that supports PoE. An Ethernet powered device whose power is supplied by the Ethernet power sourcing equipment refers to a device that is connected to the Ethernet power sourcing equipment through an Ethernet cable and whose power has already been supplied by the Ethernet power sourcing equipment. The number of Ethernet powered devices whose power is supplied by the Ethernet power sourcing equipment may be one or multiple. In this embodiment of the present invention, an Ethernet powered device whose power requirement (English: power requirement) is greater than a set value, for example, 30 W, is called a high-power Ethernet powered device, and an Ethernet powered device whose power requirement is less than or equal to the set value is called a low-power Ethernet powered device.

When the power supply mode of the Ethernet power sourcing equipment is the first power supply mode, the Ethernet power sourcing equipment preferentially supplies power to a low-power Ethernet powered device and supplies power to a high-power Ethernet powered device only after a power supply requirement of the low-power Ethernet powered device is met. Therefore, when the power supply mode of the Ethernet power sourcing equipment is the first power supply mode, a power supply priority of the high-power Ethernet powered device is set to a lowest priority. The lowest priority refes toa priority that is a lowest one among all priorities that can be set for Ethernet powered devices. The lowest priority may be lower than a lowest one among all priorities that can be set for low-power Ethernet powered devices, or may be the same as a lowest priority among all priorities that can be set for low-power Ethernet powered devices. For example, a power supply priority that can be set for a low-power Ethernet powered device is one of the following: critical (English: critical), high (English: high), and low (English: low), and a power supply priority of a high-power Ethernet powered device is set to very low (English: very low), where a sequence of power supply priorities is critical, high, low, and very low in descending order. For another example, a power supply priority that can be set for a low-power Ethernet powered device is one of the following: critical, high, and low (English: low); and a power supply priority of a high-power Ethernet powered device is set to low, where a sequence of power supply priorities is sequentially critical, high, and low in descending order. The Ethernet power sourcing equipment preferentially supplies power to an Ethernet powered device whose power supply priority is relatively high. The power over Ethernet apparatus sets a power supply priority of a low-power Ethernet powered device according to a preset policy. The preset policy herein may be the same as or different from the following preset policy that is used when the power supply mode of the Ethernet power sourcing equipment is a second power supply mode. The following describes a case in which the preset policy herein is the same as the following preset policy that is used when the power supply mode of the Ethernet power sourcing equipment is the second power supply mode.

When the power supply mode of the Ethernet power sourcing equipment is the second power supply mode, the power over Ethernet apparatus sets the power supply priority of the high-power Ethernet powered device according to a preset policy, where the preset policy is not related to a power requirement.

When the power supply mode of the Ethernet power sourcing equipment is the second power supply mode, the Ethernet power sourcing equipment supplies power without distinguishing a low-power Ethernet powered device and a high-power Ethernet powered device, and the power over Ethernet apparatus sets power supply priorities of all Ethernet powered devices according to the preset policy that is not related to the power requirement. For example, the preset policy that is not related to the power requirement may be that, according to a time sequence, a priority of an Ethernet powered device that is connected to the Ethernet power sourcing equipment earlier is higher, or a priority of an Ethernet powered device that is connected to the Ethernet power sourcing equipment later is higher. For another example, a power supply priority of an Ethernet powered device is set according to a preset priority of an Ethernet port of the Ethernet power sourcing equipment to which the Ethernet powered device is connected. For example, the Ethernet power sourcing equipment includes eight Ethernet ports, which are a port 1 to a port 8; power supply priorities of Ethernet powered devices that are connected to the port 1, a port 4, and a port 5 are critical; power supply priorities of Ethernet powered devices that are connected to a port 2, a port 3, and the port 8 are high; and power supply priorities of Ethernet powered devices that are connected to a port 6 and a port 7 are low. For another example, a priority of an Ethernet powered device that is connected to an Ethernet port whose number is relatively small and that is of the Ethernet power sourcing equipment is higher.

The power supply mode of the Ethernet power sourcing equipment is set by a user of the Ethernet power sourcing equipment. For example, if the user of the Ethernet power sourcing equipment expects that the Ethernet power sourcing equipment preferentially supplies power to a low-power Ethernet powered device, the power supply mode of the Ethernet power sourcing equipment is set to the first power supply mode; and if the user of the Ethernet power sourcing equipment expects that the Ethernet power sourcing equipment supplies power only according to a policy that is not related to a power requirement, the power supply mode of the Ethernet power sourcing equipment is set to the second power supply mode.

The power supply mode may be set in a software manner, for example, set by using a console of the power over Ethernet apparatus, or set in a hardware manner, for example, set by using a power supply mode switching key. The power supply mode switching key is configured to switch the power supply mode of the Ethernet power sourcing equipment from the first power supply mode to the second power supply mode and switch the power supply mode of the Ethernet power sourcing equipment from the second power supply mode to the first power supply mode.

104. When a new Ethernet powered device is connected to the Ethernet power sourcing equipment, determine a power supply priority of the new Ethernet powered device according to the power supply mode of the Ethernet power sourcing equipment and a power requirement of the new Ethernet powered device.

When the power supply mode of the Ethernet power sourcing equipment is the first power supply mode and if the new Ethernet powered device is a high-power Ethernet powered device, the power supply priority of the new Ethernet powered device is set to the lowest priority; and if the new Ethernet powered device is a low-power Ethernet powered device, the power supply priority of the new Ethernet powered device is set according to a preset policy. When the power supply mode of the Ethernet power sourcing equipment is the second power supply mode, the power supply priority of the new Ethernet powered device is set according to a preset policy.

106. Determine, according to a used power of the Ethernet power sourcing equipment, a power supply priority of an Ethernet powered device whose power is supplied by the Ethernet power sourcing equipment, the power supply priority of the new Ethernet powered device, and a maximum output power of the Ethernet power sourcing equipment, whether the Ethernet power sourcing equipment supplies power to the new Ethernet powered device.

The used power of the Ethernet power sourcing equipment is obtained through measurement performed by the Ethernet power sourcing equipment and currently is a sum of powers actually supplied to all Ethernet powered devices. The Ethernet power sourcing equipment may measure a power supplied to each Ethernet powered device and calculate a sum of the powers to obtain the used power of the Ethernet power sourcing equipment. The Ethernet power sourcing equipment may also directly measure a total power supplied to the Ethernet powered devices. The Ethernet power sourcing equipment may also measure an electric current (English: electric current) supplied to each Ethernet powered device. After a sum of the electric currents supplied to the Ethernet powered devices is calculated, a voltage (English: voltage) provided for each Ethernet powered device whose power is supplied by the Ethernet power sourcing equipment is then multiplied, so as to obtain the used power of the Ethernet power sourcing equipment. If the power over Ethernet apparatus is implemented by an independent apparatus, the power over Ethernet apparatus acquires, from the Ethernet power sourcing equipment, the used power obtained through measurement performed by the Ethernet power sourcing equipment. Optionally, a sum of power requirements of all Ethernet powered devices whose power is supplied by the Ethernet power sourcing equipment may be used as an approximate value of the used power of the Ethernet power sourcing equipment, and no actual measurement is performed.

The maximum output power of the Ethernet power sourcing equipment is preset and is a maximum value of a power that can be supplied by the Ethernet power sourcing equipment to an Ethernet powered device.

Specifically, a current working state of the Ethernet power sourcing equipment is acquired according to the maximum output power of the Ethernet power sourcing equipment, a first preset power threshold, and the used power of the Ethernet power sourcing equipment. The current working state of the Ethernet power sourcing equipment may be one of the following: a normal state, a high-load state, and an overload state. For example, if the used power of the Ethernet power sourcing equipment is less than or equal to the first power threshold, the current working state of the Ethernet power sourcing equipment is the normal state; if the used power of the Ethernet power sourcing equipment is greater than the first power threshold and less than or equal to the maximum output power of the Ethernet power sourcing equipment, the current working state of the Ethernet power sourcing equipment is the high-load state; and if the used power of the Ethernet power sourcing equipment is greater than the maximum output power of the Ethernet power sourcing equipment, the current working state of the Ethernet power sourcing equipment is the overload state. A value of the first power threshold is less than or equal to a value of the maximum output power of the Ethernet power sourcing equipment. If the value of the first power threshold is equal to the value of the maximum output power of the Ethernet power sourcing equipment, the current working state of the Ethernet power sourcing equipment may only be one of the following: the normal state and the overload state.

When the current working state of the Ethernet power sourcing equipment is the normal state, it is determined that the Ethernet power sourcing equipment supplies power to the new Ethernet powered device. Alternatively, when the current working state of the Ethernet power sourcing equipment is the normal state and if the used power of the Ethernet power sourcing equipment plus the power requirement of the new Ethernet powered device is lower than the maximum output power of the Ethernet power sourcing equipment, it is determined that the Ethernet power sourcing equipment supplies power to the new Ethernet powered device.

When the current working state of the Ethernet power sourcing equipment is the high-load state and if the power supply priority of the new Ethernet powered device is higher than a power supply priority of an Ethernet powered device with a lowest power supply priority among Ethernet powered devices whose power is supplied by the Ethernet power sourcing equipment, it is determined that the Ethernet power sourcing equipment supplies power to the new Ethernet powered device, and it is determined that the Ethernet power sourcing equipment stops supplying power to the Ethernet powered device with the lowest power supply priority among the Ethernet powered devices.

When the current working state of the Ethernet power sourcing equipment is the overload state, it is determined that the Ethernet power sourcing equipment does not supply power to the new Ethernet powered device. Optionally, further, when the current working state of the Ethernet power sourcing equipment is the overload state, it is determined that the Ethernet power sourcing equipment stops supplying power to an Ethernet powered device with a lowest power supply priority among Ethernet powered devices whose power is supplied by the Ethernet power sourcing equipment. After the step of stopping supplying power to the Ethernet powered device with the lowest power supply priority among the Ethernet powered devices whose power is supplied by the Ethernet power sourcing equipment is performed by the Ethernet power sourcing equipment, if the current working state of the Ethernet power sourcing equipment remains the overload state, the foregoing step is repeated, that is, it is determined that the Ethernet power sourcing equipment stops supplying power to the current Ethernet powered device with the lowest power supply priority among the Ethernet powered devices whose power is supplied by the Ethernet power sourcing equipment. After the step of stopping supplying power to the Ethernet powered device with the lowest power supply priority among the Ethernet powered devices whose power is supplied by the Ethernet power sourcing equipment is performed, if the current working state of the Ethernet power sourcing equipment changes to the normal state or the high-load state, it is determined, according to the foregoing method in which the current working state is the normal state or the high-load state, whether the Ethernet power sourcing equipment supplies power to the new Ethernet powered device. Optionally, further, when the current working state of the Ethernet power sourcing equipment is the overload state, after power is stopped being supplied to the Ethernet powered device with the lowest power supply priority among the Ethernet powered devices whose power is supplied by the Ethernet power sourcing equipment, power is forbidden to be supplied again to the Ethernet powered device with the lowest power supply priority. The current working state of the Ethernet power sourcing equipment can be prevented from flapping in some specific implementations by using the solution of forbidding supplying power again to the Ethernet powered device with the lowest power supply priority. For example, the value of the first power threshold is equal to the value of the maximum output power of the Ethernet power sourcing equipment, and the current working state of the Ethernet power sourcing equipment can only be one of the following: the normal state and the overload state. Or, the value of the first power threshold approximates to the value of the maximum output power of the Ethernet power sourcing equipment, and a single Ethernet powered device may make the current working state of the Ethernet power sourcing equipment change from the normal state to the overload state. When the current working state of the Ethernet power sourcing equipment is the normal state and if it is determined, without considering the power requirement of the new Ethernet powered device, that the Ethernet power sourcing equipment supplies power to the new Ethernet powered device, the current working state of the Ethernet power sourcing equipment may flap between the normal state and the overload state. The flapping can be prevented by forbidding supplying power again to the Ethernet powered device with the lowest power supply priority. Specifically, for the solution of forbidding supplying power again to the Ethernet powered device with the lowest power supply priority, several different implementations may exist. For example, once it is determined that power is stopped being supplied to an Ethernet powered device, power is forbidden to be supplied again to the Ethernet powered device; or, when it is detected that the number of times that the current working state of the Ethernet power sourcing equipment changes in a preset time period exceeds a preset value, power is forbidden to be supplied again to the Ethernet powered device with the lowest power supply priority; or, when the number of times of stopping supplying power to a same Ethernet powered device reaches a preset value, power is forbidden to be supplied again to the Ethernet powered device. Optionally, if the used power of the Ethernet power sourcing equipment is greater than a second preset power threshold, the power over Ethernet apparatus sends out an alarm. For example, an alarm in the form of sound or light is sent out, or the user of the Ethernet power sourcing equipment is alarmed in the form of a short message according to a preset mobile phone number or in the form of an email according to a preset email address. A value of the second power threshold is greater than or equal to the value of the first power threshold and less than or equal to the value of the maximum output power of the Ethernet power sourcing equipment.

Ethernet powered devices that are connected to the Ethernet power sourcing equipment may not be all Ethernet powered devices whose power is supplied by the Ethernet power sourcing equipment. If the power supply mode of the Ethernet power sourcing equipment changes, an Ethernet powered device that is among the Ethernet powered devices connected to the Ethernet power sourcing equipment and whose power is not supplied by the Ethernet power sourcing equipment is used as a new Ethernet powered device, and it is determined, according to the foregoing procedure, whether power is supplied to the Ethernet powered device. If the number of Ethernet powered devices that are among the Ethernet powered devices connected to the Ethernet power sourcing equipment and whose power is not supplied by the Ethernet power sourcing equipment is greater than 1, an Ethernet powered device with a highest power supply priority among them is used as a new Ethernet powered device, and it is determined, according to the foregoing procedure, whether power is supplied to these Ethernet powered devices. For example, there are totally five Ethernet powered devices connected to the Ethernet power sourcing equipment, and the Ethernet power sourcing equipment supplies power to three Ethernet powered devices among them. The power supply mode of the Ethernet power sourcing equipment is the second power supply mode. One of the three Ethernet powered devices whose power is supplied by the Ethernet power sourcing equipment is a high-power Ethernet powered device. A power supply priority of the high-power Ethernet powered device whose power is supplied by the Ethernet power sourcing equipment is critical. Two Ethernet powered devices whose power is not supplied by the Ethernet power sourcing equipment are low-power Ethernet powered devices, and power supply priorities of the two low-power Ethernet powered devices are high and low. Because the current working state of the Ethernet power sourcing equipment is the high-load state, it is determined that the Ethernet power sourcing equipment does not supply power to the two low-power Ethernet powered devices. If the power supply mode of the Ethernet power sourcing equipment changes from the second power supply mode to the first power supply mode, the power supply priority of the high-power Ethernet powered device changes to very low. The power supply priorities of the two low-power Ethernet powered devices whose power is not supplied by the Ethernet power sourcing equipment are still high and low. The two low-power Ethernet powered devices are used as new Ethernet powered devices. Because the current working state of the Ethernet power sourcing equipment is the high-load state and the power supply priority of the low-power Ethernet powered device whose power supply priority is high is higher than a power supply priority of an Ethernet powered device with a lowest power supply priority among the Ethernet powered devices whose power is supplied by the Ethernet power sourcing equipment, that is, the foregoing high-power Ethernet powered device, it is determined that the Ethernet power sourcing equipment supplies power to the low-power Ethernet powered device whose power supply priority is high, and it is determined that the Ethernet power sourcing equipment stops supplying power to the foregoing high-power Ethernet powered device. Because power is stopped being supplied to the foregoing high-power Ethernet powered device and the current working state of the Ethernet power sourcing equipment changes to the normal state, it is determined that the Ethernet power sourcing equipment supplies power to the low-power Ethernet powered device whose power supply priority is low. After power is supplied to the low-power Ethernet powered device whose power supply priority is low, if the current working state of the Ethernet power sourcing equipment changes to the high-load state, and because the power supply priority of the high-power Ethernet powered device is very low and is lower than the power supply priority of the Ethernet powered device with the lowest power supply priority among the Ethernet powered devices whose power is supplied by the Ethernet power sourcing equipment, it is determined that the Ethernet power sourcing equipment does not supply power to the high-power Ethernet powered device. After power is supplied to the low-power Ethernet powered device whose power supply priority is low, if the current working state of the Ethernet power sourcing equipment remains the normal state, and if the used power of the Ethernet power sourcing equipment plus a power requirement of the high-power Ethernet powered device is lower than the maximum output power of the Ethernet power sourcing equipment, it is determined that the Ethernet power sourcing equipment supplies power to the high-power Ethernet powered device.

FIG. 2 is a schematic diagram of a power over Ethernet apparatus according to an embodiment of the present invention. The power over Ethernet apparatus includes a setting module 202 and a determining module 204. The power over Ethernet apparatus may be implemented by an independent apparatus such as a server that is connected to an Ethernet power sourcing equipment; or, the power over Ethernet apparatus may be integrated into an Ethernet power sourcing equipment, and the power over Ethernet apparatus is implemented by the Ethernet power sourcing equipment. An Ethernet power sourcing equipment in this embodiment of the present invention is a PSE and may specifically be a network switch or a router that supports PoE.

The setting module 202 is configured to, when a power supply mode of an Ethernet power sourcing equipment is a first power supply mode, set a power supply priority of a high-power Ethernet powered device whose power is supplied by the Ethernet power sourcing equipment to a lowest priority, where the high-power Ethernet powered device is an Ethernet powered device whose power requirement is greater than a set value.

The Ethernet powered device in this embodiment of the present invention is a PD and may specifically be an IP camera, a VoIP phone, a wireless AP, a NAS, or a thin client that supports PoE. An Ethernet powered device whose power is supplied by the Ethernet power sourcing equipment refers to a device that is connected to the Ethernet power sourcing equipment through an Ethernet cable and whose power has already been supplied by the Ethernet power sourcing equipment. The number of Ethernet powered devices whose power is supplied by the Ethernet power sourcing equipment may be one or multiple. In this embodiment of the present invention, an Ethernet powered device whose power requirement is greater than a set value, for example, 30 W, is called a high-power Ethernet powered device, and an Ethernet powered device whose power requirement is less than or equal to the set value is called a low-power Ethernet powered device.

When the power supply mode of the Ethernet power sourcing equipment is the first power supply mode, the Ethernet power sourcing equipment preferentially supplies power to a low-power Ethernet powered device and supplies power to a high-power Ethernet powered device only after a power supply requirement of the low-power Ethernet powered device is met. Therefore, when the power supply mode of the Ethernet power sourcing equipment is the first power supply mode, the setting module 202 sets a power supply priority of the high-power Ethernet powered device to a lowest priority. The lowest priority refers to a priority that is a lowest one among all priorities that can be set by the setting module 202 for Ethernet powered devices. The lowest priority may be lower than a lowest one among all priorities that can be set for low-power Ethernet powered devices, or may be the same as a lowest priority among all priorities that can be set for low-power Ethernet powered devices. For example, a power supply priority that can be set by the setting module 202 for a low-power Ethernet powered device is one of the following: critical, high, and low, and a power supply priority of a high-power Ethernet powered device is set to very low, where a sequence of power supply priorities is sequentially critical, high, low, and very low in descending order. For another example, a power supply priority that can be set by the setting module 202 for a low-power Ethernet powered device is one of the following: critical, high, and low; and a power supply priority of a high-power Ethernet powered device is set to low, where a sequence of power supply priorities is sequentially critical, high, and low in descending order. The Ethernet power sourcing equipment preferentially supplies power to an Ethernet powered device whose power supply priority is relatively high. The setting module 202 sets a power supply priority of a low-power Ethernet powered device according to a preset policy. The preset policy herein may be the same as or different from the following preset policy that is used by the setting module 202 when the power supply mode of the Ethernet power sourcing equipment is a second power supply mode. The following describes a case in which the preset policy herein is the same as the following preset policy that is used when the power supply mode of the Ethernet power sourcing equipment is the second power supply mode.

The setting module 202 is further configured to set the power supply priority of the high-power Ethernet powered device according to a preset policy when the power supply mode of the Ethernet power sourcing equipment is the second power supply mode, where the preset policy is not related to a power requirement.

When the power supply mode of the Ethernet power sourcing equipment is the second power supply mode, the Ethernet power sourcing equipment supplies power without distinguishing a low-power Ethernet powered device and a high-power Ethernet powered device, and the setting module 202 sets power supply priorities of all Ethernet powered devices according to the preset policy that is not related to the power requirement. For example, the preset policy that is not related to the power requirement may be that, according to a time sequence, a priority of an Ethernet powered device that is connected to the Ethernet power sourcing equipment earlier is higher, or a priority of an Ethernet powered device that is connected to the Ethernet power sourcing equipment later is higher. For another example, a power supply priority of an Ethernet powered device is set according to a preset priority of an Ethernet port of the Ethernet power sourcing equipment to which the Ethernet powered device is connected. For example, the Ethernet power sourcing equipment includes eight Ethernet ports, which are a port 1 to a port 8; power supply priorities of Ethernet powered devices that are connected to the port 1, a port 4, and a port 5 are critical; power supply priorities of Ethernet powered devices that are connected to a port 2, a port 3, and the port 8 are high; and power supply priorities of Ethernet powered devices that are connected to a port 6 and a port 7 are low. For another example, a priority of an Ethernet powered device that is connected to an Ethernet port whose number is relatively small and that is of the Ethernet power sourcing equipment is higher.

The power supply mode of the Ethernet power sourcing equipment is set by a user of the Ethernet power sourcing equipment. For example, if the user of the Ethernet power sourcing equipment expects that the Ethernet power sourcing equipment preferentially supplies power to a low-power Ethernet powered device, the power supply mode of the Ethernet power sourcing equipment is set to the first power supply mode; and if the user of the Ethernet power sourcing equipment expects that the Ethernet power sourcing equipment supplies power only according to a policy that is not related to a power requirement, the power supply mode of the Ethernet power sourcing equipment is set to the second power supply mode.

The power supply mode may be set in a software manner, for example, set by using a console of the power over Ethernet apparatus, or set in a hardware manner, for example, set by using a power supply mode switching key. The power supply mode switching key is configured to switch the power supply mode of the Ethernet power sourcing equipment from the first power supply mode to the second power supply mode and switch the power supply mode of the Ethernet power sourcing equipment from the second power supply mode to the first power supply mode.

The setting module 202 is further configured to, when a new Ethernet powered device is connected to the Ethernet power sourcing equipment, determine a power supply priority of the new Ethernet powered device according to the power supply mode of the Ethernet power sourcing equipment and a power requirement of the new Ethernet powered device.

When the power supply mode of the Ethernet power sourcing equipment is the first power supply mode and if the new Ethernet powered device is a high-power Ethernet powered device, the setting module 202 sets the power supply priority of the new Ethernet powered device to the lowest priority; and if the new Ethernet powered device is a low-power Ethernet powered device, the setting module 202 sets the power supply priority of the new Ethernet powered device according to a preset policy. When the power supply mode of the Ethernet power sourcing equipment is the second power supply mode, the setting module 202 sets the power supply priority of the new Ethernet powered device according to a preset policy.

The determining module 204 is configured to determine, according to a used power of the Ethernet power sourcing equipment, a power supply priority of an Ethernet powered device whose power is supplied by the Ethernet power sourcing equipment, the power supply priority of the new Ethernet powered device, and a maximum output power of the Ethernet power sourcing equipment, whether the Ethernet power sourcing equipment supplies power to the new Ethernet powered device.

The used power of the Ethernet power sourcing equipment is obtained through measurement performed by the Ethernet power sourcing equipment and currently is a sum of powers actually supplied to all Ethernet powered devices. The Ethernet power sourcing equipment may measure a power supplied to each Ethernet powered device and calculate a sum of the powers to obtain the used power of the Ethernet power sourcing equipment. The Ethernet power sourcing equipment may also directly measure a total power supplied to the Ethernet powered devices. The Ethernet power sourcing equipment may also measure an electric current supplied to each Ethernet powered device. After a sum of the electric currents supplied to the Ethernet powered devices is calculated, a voltage provided for each Ethernet powered device whose power is supplied by the Ethernet power sourcing equipment is then multiplied, so as to obtain the used power of the Ethernet power sourcing equipment. If the power over Ethernet apparatus is implemented by an independent apparatus, the determining module 204 acquires, from the Ethernet power sourcing equipment, the used power obtained through measurement performed by the Ethernet power sourcing equipment. Optionally, the determining module 204 may use a sum of power requirements of all Ethernet powered devices whose power is supplied by the Ethernet power sourcing equipment as an approximate value of the used power of the Ethernet power sourcing equipment, and no actual measurement is performed.

The maximum output power of the Ethernet power sourcing equipment is preset and is a maximum value of a power that can be supplied by the Ethernet power sourcing equipment to an Ethernet powered device.

Specifically, the determining module 204 acquires a current working state of the Ethernet power sourcing equipment according to the maximum output power of the Ethernet power sourcing equipment, a first preset power threshold, and the used power of the Ethernet power sourcing equipment. The current working state of the Ethernet power sourcing equipment may be one of the following: a normal state, a high-load state, and an overload state. For example, if the used power of the Ethernet power sourcing equipment is less than or equal to the first power threshold, the current working state of the Ethernet power sourcing equipment is the normal state; if the used power of the Ethernet power sourcing equipment is greater than the first power threshold and less than or equal to the maximum output power of the Ethernet power sourcing equipment, the current working state of the Ethernet power sourcing equipment is the high-load state; and if the used power of the Ethernet power sourcing equipment is greater than the maximum output power of the Ethernet power sourcing equipment, the current working state of the Ethernet power sourcing equipment is the overload state. A value of the first power threshold is less than or equal to a value of the maximum output power of the Ethernet power sourcing equipment. If the value of the first power threshold is equal to the value of the maximum output power of the Ethernet power sourcing equipment, the current working state of the Ethernet power sourcing equipment may only be one of the following: the normal state and the overload state.

When the current working state of the Ethernet power sourcing equipment is the normal state, the determining module 204 determines that the Ethernet power sourcing equipment supplies power to the new Ethernet powered device. Alternatively, when the current working state of the Ethernet power sourcing equipment is the normal state and if the used power of the Ethernet power sourcing equipment plus the power requirement of the new Ethernet powered device is lower than the maximum output power of the Ethernet power sourcing equipment, the determining module 204 determines that the Ethernet power sourcing equipment supplies power to the new Ethernet powered device.

When the current working state of the Ethernet power sourcing equipment is the high-load state and if the power supply priority of the new Ethernet powered device is higher than a power supply priority of an Ethernet powered device with a lowest power supply priority among Ethernet powered devices whose power is supplied by the Ethernet power sourcing equipment, the determining module 204 determines that the Ethernet power sourcing equipment supplies power to the new Ethernet powered device and determines that the Ethernet power sourcing equipment stops supplying power to the Ethernet powered device with the lowest power supply priority among the Ethernet powered devices.

When the current working state of the Ethernet power sourcing equipment is the overload state, the determining module 204 determines that the Ethernet power sourcing equipment does not supply power to the new Ethernet powered device. Optionally, further, when the current working state of the Ethernet power sourcing equipment is the overload state, the determining module 204 determines that the Ethernet power sourcing equipment stops supplying power to an Ethernet powered device with a lowest power supply priority among Ethernet powered devices whose power is supplied by the Ethernet power sourcing equipment. After the step of stopping supplying power to the Ethernet powered device with the lowest power supply priority among the Ethernet powered devices whose power is supplied by the Ethernet power sourcing equipment is performed by the Ethernet power sourcing equipment, if the current working state of the Ethernet power sourcing equipment remains the overload state, the determining module 204 repeats the foregoing step, that is, determines that the Ethernet power sourcing equipment stops supplying power to the current Ethernet powered device with the lowest power supply priority among the Ethernet powered devices whose power is supplied by the Ethernet power sourcing equipment. After the step of stopping supplying power to the Ethernet powered device with the lowest power supply priority among the Ethernet powered devices whose power is supplied by the Ethernet power sourcing equipment is performed, if the current working state of the Ethernet power sourcing equipment changes to the normal state or the high-load state, the determining module 204 determines, according to the foregoing method in which the current working state is the normal state or the high-load state, whether the Ethernet power sourcing equipment supplies power to the new Ethernet powered device. Optionally, further, when the current working state of the Ethernet power sourcing equipment is the overload state, after the determining module 204 determines that power is stopped being supplied to the Ethernet powered device with the lowest power supply priority among the Ethernet powered devices whose power is supplied by the Ethernet power sourcing equipment, power is forbidden to be supplied again to the Ethernet powered device with the lowest power supply priority. The current working state of the Ethernet power sourcing equipment can be prevented from flapping in some specific implementations by using the solution of forbidding supplying power again to the Ethernet powered device with the lowest power supply priority. For example, the value of the first power threshold is equal to the value of the maximum output power of the Ethernet power sourcing equipment, and the current working state of the Ethernet power sourcing equipment may only be one of the following: the normal state and the overload state. Or, the value of the first power threshold approximates to the value of the maximum output power of the Ethernet power sourcing equipment, and a single Ethernet powered device may make the current working state of the Ethernet power sourcing equipment change from the normal state to the overload state. When the current working state of the Ethernet power sourcing equipment is the normal state and if it is determined, without considering the power requirement of the new Ethernet powered device, that the Ethernet power sourcing equipment supplies power to the new Ethernet powered device, the current working state of the Ethernet power sourcing equipment may flap between the normal state and the overload state. The flapping can be prevented by forbidding supplying power again to the Ethernet powered device with the lowest power supply priority. Specifically, for the solution of forbidding supplying power again to the Ethernet powered device with the lowest power supply priority, several different implementations may exist. For example, once the determining module 204 determines that power is stopped being supplied to an Ethernet powered device, power is forbidden to be supplied again to the Ethernet powered device; or, when the determining module 204 detects that the number of times that the current working state of the Ethernet power sourcing equipment changes in a preset time period exceeds a preset value, power is forbidden to be supplied again to the Ethernet powered device with the lowest power supply priority; or, when the number of times of stopping supplying power to a same Ethernet powered device reaches a preset value, the determining module 204 determines that power is forbidden to be supplied again to the Ethernet powered device.

Optionally, if the used power of the Ethernet power sourcing equipment is greater than a second preset power threshold, the determining module 204 sends out an alarm. For example, an alarm in the form of sound or light is sent out, or the user of the Ethernet power sourcing equipment is alarmed in the form of a short message according to a preset mobile phone number or in the form of an email according to a preset email address. A value of the second power threshold is greater than or equal to the value of the first power threshold and less than or equal to the value of the maximum output power of the Ethernet power sourcing equipment.

Ethernet powered devices that are connected to the Ethernet power sourcing equipment may not be all Ethernet powered devices whose power is supplied by the Ethernet power sourcing equipment. If the power supply mode of the Ethernet power sourcing equipment changes, the determining module 204 uses an Ethernet powered device that is among the Ethernet powered devices connected to the Ethernet power sourcing equipment and whose power is not supplied by the Ethernet power sourcing equipment as a new Ethernet powered device, and determines, according to the foregoing procedure, whether power is supplied to the Ethernet powered device. If the number of Ethernet powered devices that are among the Ethernet powered devices connected to the Ethernet power sourcing equipment and whose power is not supplied by the Ethernet power sourcing equipment is greater than 1, the determining module 204 uses an Ethernet powered device with a highest power supply priority among them as a new Ethernet powered device and determines, according to the foregoing procedure, whether power is supplied to these Ethernet powered devices. For example, there are totally five Ethernet powered devices connected to the Ethernet power sourcing equipment, and the Ethernet power sourcing equipment supplies power to three Ethernet powered devices among them. The power supply mode of the Ethernet power sourcing equipment is the second power supply mode. One of the three Ethernet powered devices whose power is supplied by the Ethernet power sourcing equipment is a high-power Ethernet powered device. A power supply priority of the high-power Ethernet powered device whose power is supplied by the Ethernet power sourcing equipment is critical. Two Ethernet powered devices whose power is not supplied by the Ethernet power sourcing equipment are low-power Ethernet powered devices, and power supply priorities of the two low-power Ethernet powered devices are high and low. Because the current working state of the Ethernet power sourcing equipment is the high-load state, it is determined that the Ethernet power sourcing equipment does not supply power to the two low-power Ethernet powered devices. If the power supply mode of the Ethernet power sourcing equipment changes from the second power supply mode to the first power supply mode, the power supply priority of the high-power Ethernet powered device changes to very low. The power supply priorities of the two low-power Ethernet powered devices whose power is not supplied by the Ethernet power sourcing equipment are still high and low. The two low-power Ethernet powered devices are used as new Ethernet powered devices. Because the current working state of the Ethernet power sourcing equipment is the high-load state and the power supply priority of the low-power Ethernet powered device whose power supply priority is high is higher than a power supply priority of an Ethernet powered device with a lowest power supply priority among the Ethernet powered devices whose power is supplied by the Ethernet power sourcing equipment, that is, the foregoing high-power Ethernet powered device, the determining module 204 determines that the Ethernet power sourcing equipment supplies power to the low-power Ethernet powered device whose power supply priority is high, and determines that the Ethernet power sourcing equipment stops supplying power to the foregoing high-power Ethernet powered device. Because power is stopped being supplied to the foregoing high-power Ethernet powered device and the current working state of the Ethernet power sourcing equipment changes to the normal state, the determining module 204 determines that the Ethernet power sourcing equipment supplies power to the low-power Ethernet powered device whose power supply priority is low. After power is supplied to the low-power Ethernet powered device whose power supply priority is low, if the current working state of the Ethernet power sourcing equipment changes to the high-load state, and because the power supply priority of the high-power Ethernet powered device is very low and is lower than the power supply priority of the Ethernet powered device with the lowest power supply priority among the Ethernet powered devices whose power is supplied by the Ethernet power sourcing equipment, the determining module 204 determines that the Ethernet power sourcing equipment does not supply power to the high-power Ethernet powered device. After power is supplied to the low-power Ethernet powered device whose power supply priority is low, if the current working state of the Ethernet power sourcing equipment remains the normal state, and if the used power of the Ethernet power sourcing equipment plus a power requirement of the high-power Ethernet powered device is lower than the maximum output power of the Ethernet power sourcing equipment, the determining module 204 determines that the Ethernet power sourcing equipment supplies power to the high-power Ethernet powered device.

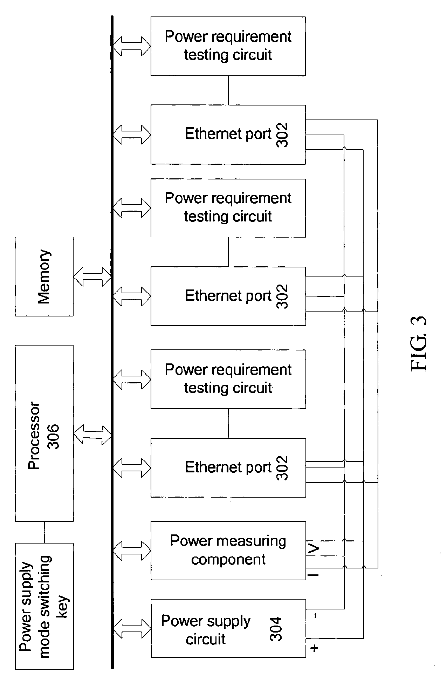

FIG. 3 is a schematic diagram of an Ethernet power sourcing equipment according to an embodiment of the present invention. The Ethernet power sourcing equipment includes an Ethernet port 302, a power supply circuit 304, and a processor 306. An Ethernet power sourcing equipment in this embodiment of the present invention is a PSE and may specifically be a network switch or a router that supports PoE.

The power supply circuit 304 is connected to the Ethernet port 302. The power supply circuit 304 is connected to the processor 306. The bold line in FIG. 3 is a bus (English: bus).

An Ethernet powered device is connected to the Ethernet power sourcing equipment through the Ethernet port 302. The Ethernet powered device and the Ethernet power sourcing equipment form a power over Ethernet system.

The processor 306 may be an application-specific integrated circuit (English: application-specific integrated circuit, abbreviation: ASIC), a field-programmable gate array (English: field-programmable gate array, abbreviation: FPGA), a complex programmable logic device (English: complex programmable logic device, abbreviation: CPLD), a central processing unit (English: central processing unit, abbreviation: CPU), or a network processor (English: network processor, abbreviation: NP). The processor performs the following operations.

When the processor 306 is a CPU or an NP, the Ethernet power sourcing equipment further includes a memory. The memory may be a volatile memory (English: volatile memory) such as a random-access memory (English: random-access memory, abbreviation: RAM) or a non-volatile memory (English: non-volatile memory), for example, a read-only memory (English: read-only memory, abbreviation: ROM), a flash memory (English: flash memory), a hard disk drive (English: hard disk drive, abbreviation: HDD), or a solid-state drive (English: solid-state drive, abbreviation: SSD). The processor is connected to the memory 308. The processor 306 performs the following operations according to a program instruction stored in the memory.

The Ethernet power sourcing equipment acquires, through a PoE classification (English: classification), a power requirement of the Ethernet powered device that is connected to the Ethernet power sourcing equipment through the Ethernet port 302. Specifically, if the power requirement of the Ethernet powered device is determined according to a data link layer classification (English: Data Link Layer classification), the classification may be completed by the processor 306. Optionally, the Ethernet power sourcing equipment may further include a power requirement testing circuit. The power requirement testing circuit is connected to the Ethernet port 302. The power requirement testing circuit is connected to the processor 306. The power requirement testing circuit determines, through the PoE classification such as a physical layer classification (English: Physical Layer classification) or a data link layer classification, the power requirement of the Ethernet powered device that is connected to the Ethernet power sourcing equipment through the Ethernet port 302. The power requirement testing circuit notifies the processor of the power requirement of the Ethernet powered device. The physical layer classification is that the power requirement testing circuit adds a classification voltage to the Ethernet port 302 and measures a classification current, so as to determine the power requirement of the Ethernet powered device. The data link layer classification is that after a data link (English: data link) is established, the Ethernet power sourcing equipment communicates with the Ethernet powered device by using a data link layer protocol (English: Data Link Layer Protocol), so as to determine the power requirement of the Ethernet powered device.

When a power supply mode of the Ethernet power sourcing equipment is a first power supply mode, the processor 306 sets a power supply priority of a high-power Ethernet powered device whose power is supplied by the Ethernet power sourcing equipment to a lowest priority, where the high-power Ethernet powered device is an Ethernet powered device whose power requirement is greater than a set value.

The Ethernet powered device in this embodiment of the present invention is a PD and may specifically be an IP camera, a VoIP phone, a wireless AP, a NAS, or a thin client that supports PoE. An Ethernet powered device whose power is supplied by the Ethernet power sourcing equipment refers to a device that is connected to the Ethernet power sourcing equipment through an Ethernet cable and the Ethernet port 302 and whose power has already been supplied by the Ethernet power sourcing equipment. The number of Ethernet powered devices whose power is supplied by the Ethernet power sourcing equipment may be one or multiple. In this embodiment of the present invention, an Ethernet powered device whose power requirement is greater than a set value, for example, 30 W, is called a high-power Ethernet powered device, and an Ethernet powered device whose power requirement is less than or equal to the set value is called a low-power Ethernet powered device.

When the power supply mode of the Ethernet power sourcing equipment is the first power supply mode, the Ethernet power sourcing equipment preferentially supplies power to a low-power Ethernet powered device and supplies power to a high-power Ethernet powered device only after a power supply requirement of the low-power Ethernet powered device is met. Therefore, when the power supply mode of the Ethernet power sourcing equipment is the first power supply mode, the processor 306 sets a power supply priority of the high-power Ethernet powered device to a lowest priority. The lowest priority refers to a priority that is a lowest one among all priorities that can be set for Ethernet powered devices. The lowest priority may be lower than a lowest one among all priorities that can be set for low-power Ethernet powered devices, or may be the same as a lowest priority among all priorities that can be set for low-power Ethernet powered devices. For example, a power supply priority that can be set for a low-power Ethernet powered device is one of the following: critical, high, and low; and a power supply priority of a high-power Ethernet powered device is set to very low, where a sequence of power supply priorities is sequentially critical, high, low, and very low in descending order. For another example, a power supply priority that can be set for a low-power Ethernet powered device is one of the following: critical, high, and low; and a power supply priority of a high-power Ethernet powered device is set to low, where a sequence of power supply priorities is sequentially critical, high, and low in descending order. The Ethernet power sourcing equipment preferentially supplies power to an Ethernet powered device whose power supply priority is relatively high. The processor 306 sets a power supply priority of a low-power Ethernet powered device according to a preset policy. The preset policy herein may be the same as or different from the following preset policy that is used when the power supply mode of the Ethernet power sourcing equipment is a second power supply mode. The following describes a case in which the preset policy herein is the same as the following preset policy that is used when the power supply mode of the Ethernet power sourcing equipment is the second power supply mode.

When the power supply mode of the Ethernet power sourcing equipment is the second power supply mode, the processor 306 sets the power supply priority of the high-power Ethernet powered device according to a preset policy, where the preset policy is not related to a power requirement. When the power supply mode of the Ethernet power sourcing equipment is the second power supply mode, the Ethernet power sourcing equipment supplies power without distinguishing a low-power Ethernet powered device and a high-power Ethernet powered device, and the processor 306 sets power supply priorities of all Ethernet powered devices according to the preset policy that is not related to the power requirement. For example, the preset policy that is not related to the power requirement may be that, according to a time sequence, a priority of an Ethernet powered device that is connected to the Ethernet power sourcing equipment earlier is higher, or a priority of an Ethernet powered device that is connected to the Ethernet power sourcing equipment later is higher. For another example, the processor 306 sets a power supply priority of an Ethernet powered device according to a preset priority of the Ethernet port 302 of the Ethernet power sourcing equipment to which the Ethernet powered device is connected. For example, the Ethernet power sourcing equipment includes eight Ethernet ports 302, which are a port 1 to a port 8; power supply priorities of Ethernet powered devices that are connected to the port 1, a port 4, and a port 5 are critical; power supply priorities of Ethernet powered devices that are connected to a port 2, a port 3, and the port 8 are high; and power supply priorities of Ethernet powered devices that are connected to a port 6 and a port 7 are low. For another example, a priority of an Ethernet powered device that is connected to an Ethernet port 302 whose number is relatively small and that is of the Ethernet power sourcing equipment is higher.

The power supply mode of the Ethernet power sourcing equipment is set by a user of the Ethernet power sourcing equipment. For example, if the user of the Ethernet power sourcing equipment expects that the Ethernet power sourcing equipment preferentially supplies power to a low-power Ethernet powered device, the power supply mode of the Ethernet power sourcing equipment is set to the first power supply mode; and if the user of the Ethernet power sourcing equipment expects that the Ethernet power sourcing equipment supplies power only according to a policy that is not related to a power requirement, the power supply mode of the Ethernet power sourcing equipment is set to the second power supply mode.

The power supply mode may be set in a software manner; for example, the user of the Ethernet power sourcing equipment sets the power supply mode by using a software interface, so that the processor 306 can acquire the power supply mode of the Ethernet power sourcing equipment. The power supply mode may also be set in a hardware manner, for example, set by using a power supply mode switching key. When the power supply mode is set by using a power supply mode switching key, the Ethernet power sourcing equipment further includes the power supply mode switching key. The power supply mode switching key is connected to the processor. The power supply mode switching key may be disposed on a panel of the Ethernet power sourcing equipment, and its specific physical form may be a button or a switch. The power supply mode switching key is configured to switch the power supply mode of the Ethernet power sourcing equipment from the first power supply mode to the second power supply mode and switch the power supply mode of the Ethernet power sourcing equipment from the second power supply mode to the first power supply mode. The power supply mode switching key may be connected to a first pin of the processor. The power supply mode switching key outputs a different level when the Ethernet power sourcing equipment is in a different power supply mode. For example, when the power supply mode is the first power supply mode, the power supply mode switching key outputs a high level; and when the power supply mode is the second power supply mode, the power supply mode switching key outputs a low level. The processor 306 determines a current power supply mode of the Ethernet power sourcing equipment according to a level of the first pin. In FIG. 3, that the power supply mode is set by using the power supply mode switching key and the power supply mode switching key is connected to the first pin of the processor is used as an example for description. The power supply mode switching key may also be connected to the processor 306 through a bus. When the power supply mode of the Ethernet power sourcing equipment changes, the power supply mode switching key outputs a preset code, and the processor 306 determines a current mode of the Ethernet power sourcing equipment according to the received code.

When a new Ethernet powered device is connected to the Ethernet power sourcing equipment through the Ethernet port 302, the power requirement testing circuit determines a power requirement of the new Ethernet powered device.

The processor 306 determines a power supply priority of the new Ethernet powered device according to the power supply mode of the Ethernet power sourcing equipment and the power requirement of the new Ethernet powered device.

When the power supply mode of the Ethernet power sourcing equipment is the first power supply mode and if the new Ethernet powered device is a high-power Ethernet powered device, the processor 306 sets the power supply priority of the new Ethernet powered device to the lowest priority; and if the new Ethernet powered device is a low-power Ethernet powered device, the processor 306 sets the power supply priority of the new Ethernet powered device according to a preset policy. When the power supply mode of the Ethernet power sourcing equipment is the second power supply mode, the processor 306 sets the power supply priority of the new Ethernet powered device according to a preset policy.

The processor 306 determines, according to a used power of the Ethernet power sourcing equipment, a power supply priority of an Ethernet powered device whose power is supplied by the Ethernet power sourcing equipment, the power supply priority of the new Ethernet powered device, and a maximum output power of the Ethernet power sourcing equipment, whether the power supply circuit 304 supplies power to the new Ethernet powered device.

A sum of power requirements of all Ethernet powered devices whose power is supplied by the Ethernet power sourcing equipment may be used as an approximate value of the used power of the Ethernet power sourcing equipment, and no actual measurement is performed. Optionally, the used power of the Ethernet power sourcing equipment is obtained through measurement performed by the Ethernet power sourcing equipment and currently is a sum of powers actually supplied to all Ethernet powered devices. When the used power of the Ethernet power sourcing equipment is obtained through measurement, the Ethernet power sourcing equipment further includes a power measuring component, where the power measuring component is connected to the processor 306. Optionally, the power measuring component may be connected to each Ethernet port 302, and the power measuring component measures a power supplied by each Ethernet port 302. Specifically, the power measuring component measures an electric current passing through an Ethernet port 302 and a voltage provided by the Ethernet port 302, and a power that is supplied by the Ethernet port 302 is obtained according to the electric current and the voltage. A sum of the powers that are supplied by the Ethernet ports 302 is calculated to obtain the used power of the Ethernet power sourcing equipment. The power measuring device may also measure power that is supplied by the power supply circuit 304. Specifically, the power measuring component measures an electric current output by the power supply circuit 304 and a voltage output by the power supply circuit 304, obtains, according to the foregoing electric current and voltage, the power that is supplied by the power supply circuit 304, and uses the power as the used power of the Ethernet power sourcing equipment. The power measuring component may also measure an electric current passing through each Ethernet port 302 and measure a voltage output by the power supply circuit 304. After a sum of the electric currents passing through the Ethernet ports 302 is calculated, the voltage output by the power supply circuit 304 is then multiplied, so as to obtain the used power of the Ethernet power sourcing equipment. In FIG. 3, only the last implementation manner is used as an example to draw the schematic diagram, and in this figure, "+" and "-" indicate positive polarity and negative polarity, respectively, "V" indicates an end for measuring a voltage, "I" indicates an end for measuring an electric current.

The maximum output power of the Ethernet power sourcing equipment is preset and is a maximum value of a power that can be supplied by Ethernet power sourcing equipment to an Ethernet powered device.

Specifically, the processor 306 acquires a current working state of the Ethernet power sourcing equipment according to the maximum output power of the Ethernet power sourcing equipment, a first preset power threshold, and the used power of the Ethernet power sourcing equipment. The current working state of the Ethernet power sourcing equipment may be one of the following: a normal state, a high-load state, and an overload state. For example, if the used power of the Ethernet power sourcing equipment is less than or equal to the first power threshold, the current working state of the Ethernet power sourcing equipment is the normal state; if the used power of the Ethernet power sourcing equipment is greater than the first power threshold and less than or equal to the maximum output power of the Ethernet power sourcing equipment, the current working state of the Ethernet power sourcing equipment is the high-load state; and if the used power of the Ethernet power sourcing equipment is greater than the maximum output power of the Ethernet power sourcing equipment, the current working state of the Ethernet power sourcing equipment is the overload state. A value of the first power threshold is less than or equal to a value of the maximum output power of the Ethernet power sourcing equipment. If the value of the first power threshold is equal to the value of the maximum output power of the Ethernet power sourcing equipment, the current working state of the Ethernet power sourcing equipment may only be one of the following: the normal state and the overload state.

When the current working state of the Ethernet power sourcing equipment is the normal state, the processor 306 determines that the power supply circuit 304 supplies power to the new Ethernet powered device. Specifically, the power supply circuit 304 supplies power to the new Ethernet powered device through the Ethernet port 302. Alternatively, when the current working state of the Ethernet power sourcing equipment is the normal state and if the used power of the Ethernet power sourcing equipment plus the power requirement of the new Ethernet powered device is lower than the maximum output power of the Ethernet power sourcing equipment, the processor 306 determines that the power supply circuit 304 supplies power to the new Ethernet powered device. When the current working state of the Ethernet power sourcing equipment is the high-load state and if the power supply priority of the new Ethernet powered device is higher than a power supply priority of an Ethernet powered device with a lowest power supply priority among Ethernet powered devices whose power is supplied by the Ethernet power sourcing equipment, the processor 306 determines that the power supply circuit 304 supplies power to the new Ethernet powered device through the Ethernet port 302, and the processor 306 determines that the power supply circuit 304 stops supplying power to the Ethernet powered device with the lowest power supply priority among the Ethernet powered devices.

When the current working state of the Ethernet power sourcing equipment is the overload state, the processor 306 determines that the power supply circuit 304 does not supply power to the new Ethernet powered device. Optionally, further, when the current working state of the Ethernet power sourcing equipment is the overload state, the processor 306 determines that the power supply circuit 304 stops supplying power to an Ethernet powered device with a lowest power supply priority among Ethernet powered devices whose power is supplied by the Ethernet power sourcing equipment. After the step of stopping supplying power to the Ethernet powered device with the lowest power supply priority among the Ethernet powered devices whose power is supplied by the Ethernet power sourcing equipment is performed by the power supply circuit 304, if the current working state of the Ethernet power sourcing equipment remains the overload state, the processor 306 repeats the foregoing step, that is, determines that the Ethernet power sourcing equipment stops supplying power to the current Ethernet powered device with the lowest power supply priority among the Ethernet powered devices whose power is supplied by the Ethernet power sourcing equipment. After the step that the power supply circuit 304 stops supplying power to the Ethernet powered device with the lowest power supply priority among the Ethernet powered devices whose power is supplied by the Ethernet power sourcing equipment is performed, if the current working state of the Ethernet power sourcing equipment changes to the normal state or the high-load state, the processor 306 determines, according to the foregoing method in which the current working state is the normal state or the high-load state, whether the Ethernet power sourcing equipment supplies power to the new Ethernet powered device. Optionally, further, when the current working state of the Ethernet power sourcing equipment is the overload state, after the power supply circuit 304 stops supplying power to the Ethernet powered device with the lowest power supply priority among the Ethernet powered devices whose power is supplied by the Ethernet power sourcing equipment, the processor 306 forbids the power supply circuit 304 to supply power again to the Ethernet powered device with the lowest power supply priority. The current working state of the Ethernet power sourcing equipment can be prevented from flapping in some specific implementations by using the solution of forbidding supplying power again to the Ethernet powered device with the lowest power supply priority. For example, the value of the first power threshold is equal to the value of the maximum output power of the Ethernet power sourcing equipment, and the current working state of the Ethernet power sourcing equipment may only be one of the following: the normal state and the overload state. Or, the value of the first power threshold approximates to the value of the maximum output power of the Ethernet power sourcing equipment, and a single Ethernet powered device may make the current working state of the Ethernet power sourcing equipment change from the normal state to the overload state. When the current working state of the Ethernet power sourcing equipment is the normal state and if it is determined, without considering the power requirement of the new Ethernet powered device, that the Ethernet power sourcing equipment supplies power to the new Ethernet powered device, the current working state of the Ethernet power sourcing equipment may flap between the normal state and the overload state. The flapping can be prevented by forbidding supplying power again to the Ethernet powered device with the lowest power supply priority. Specifically, for the solution of forbidding supplying power again to the Ethernet powered device with the lowest power supply priority, several different implementations may exist. For example, once the processor 306 determines that power is stopped being supplied to an Ethernet powered device, the power supply circuit 304 is forbidden to supply power again to the Ethernet powered device; or, when the processor 306 detects that the number of times that the current working state of the Ethernet power sourcing equipment changes in a preset time period exceeds a preset value, the power supply circuit 304 is forbidden to supply power again to the Ethernet powered device with the lowest power supply priority; or, when the number of times that the power supply circuit 304 stops supplying power to a same Ethernet powered device reaches a preset value, the processor 306 forbids the power supply circuit 304 to supply power again to the Ethernet powered device. The forbidding the power supply circuit 304 to supply power again to the Ethernet powered device may be specifically that the processor 306 no longer sends, to the power supply circuit 304, an instruction of supplying power to the forbidden Ethernet powered device, or may be specifically that the processor 306 sends, to the power supply circuit 304, an instruction for forbidding supplying power to the Ethernet powered device.

Optionally, if the used power of the Ethernet power sourcing equipment is greater than a second preset power threshold, the processor 306 sends out an alarm. For example, the processor 306 instructs a loudspeaker of the Ethernet power sourcing equipment to send out an alarm in the form of sound, or the processor 306 instructs an indicator or a display of the Ethernet power sourcing equipment to send out an alarm in the form of light, or the processor 306 alarms a user of the Ethernet power sourcing equipment in the form of a short message according to a preset mobile phone number or in the form of an email according to a preset email address. A value of the second power threshold is greater than or equal to the value of the first power threshold and less than or equal to the value of the maximum output power of the Ethernet power sourcing equipment. Ethernet powered devices that are connected to the Ethernet power sourcing equipment may not be all Ethernet powered devices whose power is supplied by the Ethernet power sourcing equipment. If the power supply mode of the Ethernet power sourcing equipment changes, an Ethernet powered device that is among the Ethernet powered devices connected to the Ethernet power sourcing equipment and whose power is not supplied by the Ethernet power sourcing equipment is used as a new Ethernet powered device, and it is determined, according to the foregoing procedure, whether power is supplied to the Ethernet powered device. If the number of Ethernet powered devices that are among the Ethernet powered devices connected to the Ethernet power sourcing equipment and whose power is not supplied by the Ethernet power sourcing equipment is greater than 1, an Ethernet powered device with a highest power supply priority among them is used as a new Ethernet powered device, and it is determined, according to the foregoing procedure, whether power is supplied to these Ethernet powered devices. For example, there are totally five Ethernet powered devices connected to the Ethernet power sourcing equipment, and the Ethernet power sourcing equipment supplies power to three Ethernet powered devices among them. The power supply mode of the Ethernet power sourcing equipment is the second power supply mode. One of the three Ethernet powered devices whose power is supplied by the Ethernet power sourcing equipment is a high-power Ethernet powered device. A power supply priority of the high-power Ethernet powered device whose power is supplied by the Ethernet power sourcing equipment is critical. Two Ethernet powered devices whose power is not supplied by the Ethernet power sourcing equipment are low-power Ethernet powered devices, and power supply priorities of the two low-power Ethernet powered devices are high and low. Because the current working state of the Ethernet power sourcing equipment is the high-load state, it is determined that the Ethernet power sourcing equipment does not supply power to the two low-power Ethernet powered devices. If the power supply mode of the Ethernet power sourcing equipment changes from the second power supply mode to the first power supply mode, the power supply priority of the high-power Ethernet powered device changes to very low. The power supply priorities of the two low-power Ethernet powered devices whose power is not supplied by the Ethernet power sourcing equipment are still high and low. The two low-power Ethernet powered devices are used as new Ethernet powered devices. Because the current working state of the Ethernet power sourcing equipment is the high-load state and the power supply priority of the low-power Ethernet powered device whose power supply priority is high is higher than a power supply priority of an Ethernet powered device with a lowest power supply priority among the Ethernet powered devices whose power is supplied by the Ethernet power sourcing equipment, that is, the foregoing high-power Ethernet powered device, it is determined that the Ethernet power sourcing equipment supplies power to the low-power Ethernet powered device whose power supply priority is high, and it is determined that the Ethernet power sourcing equipment stops supplying power to the foregoing high-power Ethernet powered device. Because power is stopped being supplied to the foregoing high-power Ethernet powered device and the current working state of the Ethernet power sourcing equipment changes to the normal state, it is determined that the Ethernet power sourcing equipment supplies power to the low-power Ethernet powered device whose power supply priority is low. After power is supplied to the low-power Ethernet powered device whose power supply priority is low, if the current working state of the Ethernet power sourcing equipment changes to the high-load state, and because the power supply priority of the high-power Ethernet powered device is very low and is lower than the power supply priority of the Ethernet powered device with the lowest power supply priority among the Ethernet powered devices whose power is supplied by the Ethernet power sourcing equipment, it is determined that the Ethernet power sourcing equipment does not supply power to the high-power Ethernet powered device. After power is supplied to the low-power Ethernet powered device whose power supply priority is low, if the current working state of the Ethernet power sourcing equipment remains the normal state, and if the used power of the Ethernet power sourcing equipment plus a power requirement of the high-power Ethernet powered device is lower than the maximum output power of the Ethernet power sourcing equipment, it is determined that the Ethernet power sourcing equipment supplies power to the high-power Ethernet powered device.

A person of ordinary skill in the art may understand that all or a part of the steps in the foregoing method embodiments may be implemented by a program instructing relevant hardware. The corresponding program may be stored in a computer readable storage medium. The foregoing storage medium may be a random-access memory, a read-only memory, a flash memory, a hard disk drive, a solid-state drive, an optical disk, or the like.

The foregoing descriptions are merely exemplary embodiments of the present invention, but are not intended to limit the protection scope of the present invention. Therefore, the protection scope of the present invention shall be subject to the protection scope of the claims.

## Claims

1. A power over Ethernet method, comprising:
when a power supply mode of an Ethernet power sourcing equipment is a first power supply mode, determining, a high-power Ethernet powered device and a low-power Ethernet powered device among Ethernet powered devices connected to the Ethernet power sourcing equipment and whose power are supplied by the Ethernet power sourcing equipment, wherein the high-power Ethernet powered device is an Ethernet powered device whose power requirement is greater than a set value, the low-power Ethernet powered device is an Ethernet powered device whose power requirement is less than or equal to the set value;
setting a power supply priority of the high-power Ethernet powered device to a lowest priority, wherein the power supply priority of the high-power Ethernet powered device is lower than a lowest priority that can be set for the low-power Ethernet powered device;
when a new Ethernet powered device is connected to the Ethernet power sourcing equipment, determining a power supply priority of the new Ethernet powered device according to the power supply mode of the Ethernet power sourcing equipment and a power requirement of the new Ethernet powered device; and
determining, according to a used power of the Ethernet power sourcing equipment, power supply priorities of the Ethernet powered devices, the power supply priority of the new Ethernet powered device, and a maximum output power of the Ethernet power sourcing equipment, whether the Ethernet power sourcing equipment supplies power to the new Ethernet powered device.

2. The method according to claim 1, wherein the determining whether the Ethernet power sourcing equipment supplies power to the new Ethernet powered device comprises:
acquiring a current working state of the Ethernet power sourcing equipment according to the maximum output power of the Ethernet power sourcing equipment, a first preset power threshold, and the used power of the Ethernet power sourcing equipment; and
when the current working state is a high-load state and if the power supply priority of the new Ethernet powered device is higher than a power supply priority of an Ethernet powered device with a lowest power supply priority among the Ethernet powered devices, determining that the Ethernet power sourcing equipment supplies power to the new Ethernet powered device, and determining that the Ethernet power sourcing equipment stops supplying power to the Ethernet powered device with the lowest power supply priority among the Ethernet powered devices.

3. The method according to claim 1, wherein the determining whether the Ethernet power sourcing equipment supplies power to the new Ethernet powered device comprises:
acquiring a current working state of the Ethernet power sourcing equipment according to the maximum output power of the Ethernet power sourcing equipment, a first preset power threshold, and the used power of the Ethernet power sourcing equipment; and
when the current working state is an overload state, determining that the Ethernet power sourcing equipment stops supplying power to an Ethernet powered device with a lowest power supply priority among the Ethernet powered devices, and forbidding supplying power again to the Ethernet powered device whose power is stopped being supplied.

4. A power over Ethernet apparatus, comprising a setting module and a determining module, wherein:
when a power supply mode of an Ethernet power sourcing equipment is a first power supply mode,
the determining module is configured to determine a high-power Ethernet powered device and a low-power Ethernet powered device among Ethernet powered devices connected to the Ethernet power sourcing equipment and whose power are supplied by the Ethernet power sourcing equipment, wherein the high-power Ethernet powered device is an Ethernet powered device whose power requirement is greater than a set value, the low-power Ethernet powered device is an Ethernet powered device whose power requirement is less than or equal to the set value;
the setting module is configured to, set a power supply priority of the high-power Ethernet powered device to a lowest priority, wherein the power supply priority of the high-power Ethernet powered device is lower than a lowest priority that can be set for the low-power Ethernet powered device;
the setting module is further configured to, when a new Ethernet powered device is connected to the Ethernet power sourcing equipment, determine a power supply priority of the new Ethernet powered device according to the power supply mode of the Ethernet power sourcing equipment and a power requirement of the new Ethernet powered device; and
the determining module is further configured to determine, according to a used power of the Ethernet power sourcing equipment, power supply priorities of the Ethernet powered devices, the power supply priority of the new Ethernet powered device, and a maximum output power of the Ethernet power sourcing equipment, whether the Ethernet power sourcing equipment supplies power to the new Ethernet powered device.

5. The power over Ethernet apparatus according to claim 4, wherein:
the determining module is specifically configured to acquire a current working state of the Ethernet power sourcing equipment according to the maximum output power of the Ethernet power sourcing equipment, a first preset power threshold, and the used power of the Ethernet power sourcing equipment; and when the current working state is a high-load state and if the power supply priority of the new Ethernet powered device is higher than a power supply priority of an Ethernet powered device with a lowest power supply priority among the Ethernet powered devices, determine that the Ethernet power sourcing equipment supplies power to the new Ethernet powered device, and determine that the Ethernet power sourcing equipment stops supplying power to the Ethernet powered device with the lowest power supply priority among the Ethernet powered devices.

6. The power over Ethernet apparatus according to claim 4, wherein:
the determining module is specifically configured to acquire a current working state of the Ethernet power sourcing equipment according to the maximum output power of the Ethernet power sourcing equipment, a first preset power threshold, and the used power of the Ethernet power sourcing equipment; and when the current working state is an overload state, determine that the Ethernet power sourcing equipment stops supplying power to an Ethernet powered device with a lowest power supply priority among the Ethernet powered devices, and forbid supplying power again to the Ethernet powered device whose power is stopped being supplied.

7. An Ethernet power sourcing equipment, comprising an Ethernet port, a power supply circuit, and a processor, wherein:
the power supply circuit is connected to the Ethernet port;
the power supply circuit is connected to the processor;
when a power supply mode of an Ethernet power sourcing equipment is a first power supply mode,
the processor determines a high-power Ethernet powered device and a low-power Ethernet powered device among Ethernet powered devices connected to the Ethernet power sourcing equipment and whose power are supplied by the Ethernet power sourcing equipment, wherein the high-power Ethernet powered device is an Ethernet powered device whose power requirement is greater than a set value, the low-power Ethernet powered device is an Ethernet powered device whose power requirement is less than or equal to the set value;
the processor sets a power supply priority of the high-power Ethernet powered device to a lowest priority, wherein the power supply priority of the high-power Ethernet powered device is lower than a lowest priority that can be set for the low-power Ethernet powered device;
when a new Ethernet powered device is connected to the Ethernet power sourcing equipment, a power requirement testing circuit determines a power requirement of the new Ethernet powered device;
the processor determines a power supply priority of the new Ethernet powered device according to the power supply mode of the Ethernet power sourcing equipment and the power requirement of the new Ethernet powered device; and
the processor determines, according to a used power of the Ethernet power sourcing equipment, power supply priorities of the Ethernet powered devices, the power supply priority of the new Ethernet powered device, and a maximum output power of the Ethernet power sourcing equipment, whether the power supply circuit supplies power to the new Ethernet powered device.

8. The Ethernet power sourcing equipment according to claim 7, wherein the Ethernet power sourcing equipment further comprises a power supply mode switching key;
the power supply mode switching key is connected to the processor; and
the power supply mode switching key is configured to switch the power supply mode of the Ethernet power sourcing equipment from the first power supply mode to a second power supply mode, and switch the power supply mode of the Ethernet power sourcing equipment from the second power supply mode to the first power supply mode.

9. The Ethernet power sourcing equipment according to claim 7 or 8, wherein the processor determines whether the power supply circuit supplies power to the new Ethernet powered device, which comprises:
the processor acquires a current working state of the Ethernet power sourcing equipment according to the maximum output power of the Ethernet power sourcing equipment, a first preset power threshold, and the used power of the Ethernet power sourcing equipment; and
when the current working state is a high-load state and if the power supply priority of the new Ethernet powered device is higher than a power supply priority of an Ethernet powered device with a lowest power supply priority among the Ethernet powered devices, the processor determines that the power supply circuit supplies power to the new Ethernet powered device, and determines that the power supply circuit stops supplying power to the Ethernet powered device with the lowest power supply priority among the Ethernet powered devices.

10. The Ethernet power sourcing equipment according to claim 7 or 8, wherein the processor determines whether the power supply circuit supplies power to the new Ethernet powered device, which comprises:
the processor acquires a current working state of the Ethernet power sourcing equipment according to the maximum output power of the Ethernet power sourcing equipment, a first preset power threshold, and the used power of the Ethernet power sourcing equipment; and
when the current working state is an overload state, the processor determines that the power supply circuit stops supplying power to an Ethernet powered device with a lowest power supply priority among the Ethernet powered devices, and forbids the power supply circuit to supply power again to the Ethernet powered device whose power is stopped being supplied.

11. A power over Ethernet system, comprising the Ethernet power sourcing equipment according to any one of claims 7 to 10 and an Ethernet powered device, wherein the Ethernet powered device is connected to the Ethernet power sourcing equipment through an Ethernet port of the Ethernet power sourcing equipment.

## Patentansprüche

1. Verfahren zur Stromversorgung über Ethernet, umfassend:
wenn ein Stromversorgungsmodus einer Ethernet-Stromversorgungseinrichtung ein erster Stromversorgungsmodus ist, Ermitteln eines Ethernet-stromversorgten Hochstromgeräts und eines Ethernet-stromversorgten Niedrigstromgeräts unter den Ethernet-stromversorgten Geräten, die mit der Ethernet-Stromversorgungseinrichtung verbunden sind, und deren Stromversorgung durch die Ethernet-Stromversorgungseinrichtung bereitgestellt wird, wobei das Ethernet-stromversorgte Hochstromgerät ein Ethernet-stromversorgtes Gerät ist, dessen Strombedarf größer als ein eingestellter Wert ist, und das Ethernet-stromversorgte Niedrigstromgerät ein Ethernet-stromversorgtes Gerät ist, dessen Strombedarf kleiner als der oder gleich dem eingestellten Wert ist;
Einstellen einer Stromversorgungspriorität des Ethernet-stromversorgten Hochstromgeräts auf eine niedrigste Priorität, wobei die Stromversorgungspriorität des Ethernet-stromversorgten Hochstromgeräts niedriger ist als eine niedrigste Priorität, die für das Ethernet-stromversorgte Niedrigstromgerät eingestellt werden kann;
wenn ein neues Ethernet-stromversorgtes Gerät an die Ethernet-Stromversorgungseinrichtung angeschlossen wird, Ermitteln einer Stromversorgungspriorität des neuen Ethernet-stromversorgten Geräts gemäß dem Stromversorgungsmodus der Ethernet-Stromversorgungseinrichtung und einem Strombedarf des neuen Ethernet-stromversorgten Geräts; und
Ermitteln gemäß einem genutzten Strom der Ethernet-Stromversorgungseinrichtung, den Stromversorgungsprioritäten der Ethernet-stromversorgten Geräte, der Stromversorgungspriorität des neuen Ethernet-stromversorgten Geräts und einem maximalen Ausgangsstrom der Ethernet-Stromversorgungseinrichtung, ob die Ethernet-Stromversorgungseinrichtung dem neuen Ethernet-stromversorgten Gerät eine Stromversorgung bereitstellt.

2. Verfahren nach Anspruch 1, wobei das Ermitteln, ob die Ethernet-Stromversorgungseinrichtung dem neuen Ethernet-stromversorgten Gerät eine Stromversorgung bereitstellt, umfasst:
Erfassen eines aktuellen Betriebszustands der Ethernet-Stromversorgungseinrichtung gemäß dem maximalen Ausgangsstrom der Ethernet-Stromversorgungseinrichtung, einem ersten voreingestellten Stromversorgungsschwellenwert und dem genutzten Strom der Ethernet-Stromversorgungseinrichtung; und
wenn der aktuelle Betriebszustand ein Hochlastzustand ist und wenn die Stromversorgungspriorität des neuen Ethernet-stromversorgten Geräts höher ist als eine Stromversorgungspriorität eines Ethernet-stromversorgten Geräts mit einer niedrigsten Stromversorgungspriorität unter den Ethernet-stromversorgten Geräten, Ermitteln, dass die Ethernet-Stromversorgungseinrichtung dem neuen Ethernet-stromversorgten Gerät eine Stromversorgung bereitstellt, und Ermitteln, dass die Ethernet-Stromversorgungseinrichtung die Stromversorgung des Ethernet-stromversorgten Geräts mit der niedrigsten Stromversorgungspriorität unter den Ethernet-stromversorgten Geräten stoppt.

3. Verfahren nach Anspruch 1, wobei das Ermitteln, ob die Ethernet-Stromversorgungseinrichtung dem neuen Ethernet-stromversorgten Gerät eine Stromversorgung bereitstellt, umfasst:
Erfassen eines aktuellen Betriebszustands der Ethernet-Stromversorgungseinrichtung gemäß dem maximalen Ausgangsstrom der Ethernet-Stromversorgungseinrichtung, einem ersten voreingestellten Stromversorgungsschwellenwert und dem genutzten Strom der Ethernet-Stromversorgungseinrichtung; und
wenn der aktuelle Betriebszustand ein Überlastzustand ist, Ermitteln, dass die Ethernet-Stromversorgungseinrichtung die Stromversorgung eines Ethernet-stromversorgten Geräts mit einer niedrigsten Stromversorgungspriorität unter den Ethernet-stromversorgten Geräten stoppt, und Verbieten, dass die Stromversorgung des Ethernet-stromversorgten Geräts wieder aufgenommen wird, dessen Stromversorgung gestoppt wurde.

4. Vorrichtung zur Stromversorgung über Ethernet, das ein Einstellmodul und ein Ermittlungsmodul umfasst, wobei:
wenn ein Stromversorgungsmodus einer Ethernet-Stromversorgungseinrichtung in einem ersten Stromversorgungsmodus ist,
das Ermittlungsmodul konfiguriert ist, ein Ethernet-stromversorgtes Hochstromgerät und ein Ethernet-stromversorgtes Niedrigstromgerät unter den Ethernet-stromversorgten Geräten zu ermitteln, die mit der Ethernet-Stromversorgungseinrichtung verbunden sind und deren Stromversorgung durch die Ethernet-Stromversorgungseinrichtung bereitgestellt wird, wobei das Ethernet-stromversorgte Hochstromgerät ein Ethernet-stromversorgtes Gerät ist, dessen Strombedarf größer als ein eingestellter Wert ist, und wobei das Ethernet-stromversorgte Niedrigstromgerät ein Ethernet-stromversorgtes Gerät ist, dessen Strombedarf kleiner als der oder gleich dem eingestellten Wert ist;
das Einstellmodul konfiguriert ist, eine Stromversorgungspriorität des Ethernet-stromversorgten Hochstromgeräts auf eine niedrigste Priorität einzustellen, wobei die Stromversorgungspriorität des Ethernet-stromversorgten Hochstromgeräts niedriger ist als eine niedrigste Priorität, die für das Ethernet-stromversorgte Niedrigstromgerät eingestellt werden kann;
das Einstellmodul außerdem konfiguriert ist, wenn ein neues Ethernet-stromversorgtes Gerät an die Ethernet-Stromversorgungseinrichtung angeschlossen wird, eine Stromversorgungspriorität des neuen Ethernet-stromversorgten Geräts gemäß dem Stromversorgungsmodus der Ethernet-Stromversorgungseinrichtung und einem Strombedarf des neuen Ethernet-stromversorgten Geräts zu ermitteln; und
das Ermittlungsmodul außerdem konfiguriert ist, gemäß einem genutzten Strom der Ethernet-Stromversorgungseinrichtung, den Stromversorgungsprioritäten der Ethernet-stromversorgten Geräte, der Stromversorgungspriorität des neuen Ethernet-stromversorgten Geräts und einem maximalen Ausgangsstrom der Ethernet-Stromversorgungseinrichtung zu ermitteln, ob die Ethernet-Stromversorgungseinrichtung dem neuen Ethernet-stromversorgten Gerät eine Stromversorgung bereitstellt.

5. Vorrichtung zur Stromversorgung über Ethernet nach Anspruch 4, wobei:
das Ermittlungsmodul insbesondere konfiguriert ist, einen aktuellen Betriebszustand der Ethernet-Stromversorgungseinrichtung gemäß dem maximalen Ausgangsstrom der Ethernet-Stromversorgungseinrichtung, einem ersten voreingestellten Stromversorgungsschwellenwert und dem genutzten Strom der Ethernet-Stromversorgungseinrichtung zu erfassen; und wenn der aktuelle Betriebszustand ein Hochlastzustand ist und wenn die Stromversorgungspriorität des neuen Ethernet-stromversorgten Geräts höher ist als eine Stromversorgungspriorität eines Ethernet-stromversorgten Geräts mit einer niedrigsten Stromversorgungspriorität unter den Ethernet-stromversorgten Geräten, zu ermitteln, dass die Ethernet-Stromversorgungseinrichtung dem neuen Ethernet-stromversorgten Gerät eine Stromversorgung bereitstellt, und zu ermitteln, dass die Ethernet-Stromversorgungseinrichtung die Stromversorgung des Ethernet-stromversorgten Geräts mit einer niedrigsten Stromversorgungspriorität unter den Ethernet-stromversorgten Geräten stoppt.

6. Vorrichtung zur Stromversorgung über Ethernet nach Anspruch 4, wobei:
das Ermittlungsmodul insbesondere konfiguriert ist, einen aktuellen Betriebszustand der Ethernet-Stromversorgungseinrichtung gemäß dem maximalen Ausgangsstrom der Ethernet-Stromversorgungseinrichtung, einem ersten voreingestellten Stromversorgungsschwellenwert und dem genutzten Strom der Ethernet-Stromversorgungseinrichtung zu erfassen; und wenn der aktuelle Betriebszustand ein Überlastzustand ist, zu ermitteln, dass die Ethernet-Stromversorgungseinrichtung die Stromversorgung eines Ethernet-stromversorgten Geräts mit einer niedrigsten Stromversorgungspriorität unter den Ethernet-stromversorgten Geräten stoppt, und zu verbieten, dass die Stromversorgung des Ethernet-stromversorgten Geräts wieder aufgenommen wird, dessen Stromversorgung gestoppt wurde.

7. Ethernet-Stromversorgungseinrichtung, das einen Ethernet-Anschluss, einen Stromversorgungsschaltkreis und einen Prozessor umfasst, wobei:
der Stromversorgungsschaltkreis mit dem Ethernet-Anschluss verbunden ist;
der Stromversorgungsschaltkreis mit dem Prozessor verbunden ist;
wenn ein Stromversorgungsmodus einer Ethernet-Stromversorgungseinrichtung in einem ersten Stromversorgungsmodus ist,
der Prozessor ein Ethernet-stromversorgtes Hochstromgerät und ein Ethernet-stromversorgtes Niedrigstromgerät unter den Ethernet-stromversorgten Geräten ermittelt, die mit der Ethernet-Stromversorgungseinrichtung verbunden sind und deren Stromversorgung durch die Ethernet-Stromversorgungseinrichtung bereitgestellt wird, wobei das Ethernet-stromversorgte Hochstromgerät ein Ethernet-stromversorgtes Gerät ist, dessen Strombedarf größer als ein eingestellter Wert ist, und wobei das Ethernet-stromversorgte Niedrigstromgerät ein Ethernet-stromversorgtes Gerät ist, dessen Strombedarf kleiner als der oder gleich dem eingestellten Wert ist;
der Prozessor eine Stromversorgungspriorität des Ethernet-stromversorgten Hochstromgeräts auf eine niedrigste Priorität einstellt, wobei die Stromversorgungspriorität des Ethernet-stromversorgten Hochstromgeräts niedriger ist als eine niedrigste Priorität, die für das Ethernet-stromversorgte Niedrigstromgerät eingestellt werden kann;
wenn ein neues Ethernet-stromversorgtes Gerät an die Ethernet-Stromversorgungseinrichtung angeschlossen wird, ein Strombedarfsprüfschaltkreis einen Strombedarf des neuen Ethernet-stromversorgten Geräts ermittelt;
der Prozessor eine Stromversorgungspriorität des neuen Ethernet-stromversorgten Geräts gemäß dem Stromversorgungsmodus der Ethernet-Stromversorgungseinrichtung und dem Strombedarf des neuen Ethernet-stromversorgten Geräts ermittelt; und
der Prozessor gemäß einem genutzten Strom der Ethernet-Stromversorgungseinrichtung, den Stromversorgungsprioritäten der Ethernet-stromversorgten Geräte, der Stromversorgungspriorität des neuen Ethernet-stromversorgten Geräts und einem maximalen Ausgangsstrom der Ethernet-Stromversorgungseinrichtung ermittelt, ob der Stromversorgungsschaltkreis dem neuen Ethernet-stromversorgten Gerät eine Stromversorgung bereitstellt.

8. Ethernet-Stromversorgungseinrichtung nach Anspruch 7, wobei die Ethernet-Stromversorgungseinrichtung außerdem einen Schaltschlüssel für den Stromversorgungsmodus umfasst;
wobei der Schaltschlüssel für den Stromversorgungsmodus mit dem Prozessor verbunden ist; und
wobei der Schaltschlüssel für den Stromversorgungsmodus konfiguriert ist, den Stromversorgungsmodus der Ethernet-Stromversorgungseinrichtung von dem ersten Stromversorgungsmodus auf einen zweiten Stromversorgungsmodus zu schalten und den Stromversorgungsmodus der Ethernet-Stromversorgungseinrichtung von dem zweiten Stromversorgungsmodus auf den ersten Stromversorgungsmodus zu schalten.

9. Ethernet-Stromversorgungseinrichtung nach Anspruch 7 oder 8, wobei das Ermitteln des Prozessors, ob der Stromversorgungsschaltkreis dem neuen Ethernet-stromversorgten Gerät eine Stromversorgung bereitstellt, umfasst, dass:
der Prozessor einen aktuellen Betriebszustand der Ethernet-Stromversorgungseinrichtung gemäß dem maximalen Ausgangsstrom der Ethernet-Stromversorgungseinrichtung, einem ersten voreingestellten Stromversorgungsschwellenwert und dem genutzten Strom der Ethernet-Stromversorgungseinrichtung erfasst; und
wenn der aktuelle Betriebszustand ein Hochlastzustand ist und wenn die Stromversorgungspriorität des neuen Ethernet-stromversorgten Geräts höher ist als eine Stromversorgungspriorität eines Ethernet-stromversorgten Geräts mit einer niedrigsten Stromversorgungspriorität unter den Ethernet-stromversorgten Geräten, der Prozessor ermittelt, dass der Stromversorgungsschaltkreis dem neuen Ethernet-stromversorgten Gerät eine Stromversorgung bereitstellt, und ermittelt, dass der Stromversorgungsschaltkreis die Stromversorgung des Ethernet-stromversorgten Geräts mit der niedrigsten Stromversorgungspriorität unter den Ethernet-stromversorgten Geräten stoppt.

10. Ethernet-Stromversorgungseinrichtung nach Anspruch 7 oder 8, wobei das Ermitteln des Prozessors, ob der Stromversorgungsschaltkreis dem neuen Ethernet-stromversorgten Gerät eine Stromversorgung bereitstellt, umfasst, dass:
der Prozessor einen aktuellen Betriebszustand der Ethernet-Stromversorgungseinrichtung gemäß dem maximalen Ausgangsstrom der Ethernet-Stromversorgungseinrichtung, einem ersten voreingestellten Stromversorgungsschwellenwert und dem genutzten Strom der Ethernet-Stromversorgungseinrichtung erfasst; und
wenn der aktuelle Betriebszustand ein Überlastzustand ist, der Prozessor ermittelt, dass der Stromversorgungsschaltkreis die Stromversorgung eines Ethernet-stromversorgten Geräts mit einer niedrigsten Stromversorgungspriorität unter den Ethernet-stromversorgten Geräten stoppt, und verbietet, dass der Stromversorgungsschaltkreis die Stromversorgung des Ethernet-stromversorgten Geräts wieder aufnimmt, dessen Stromversorgung gestoppt wurde.

11. System zur Stromversorgung über Ethernet, das die Ethernet-Stromversorgungseinrichtung nach einem der Ansprüche 7 bis 10 und ein Ethernet-stromversorgtes Gerät umfasst, wobei das Ethernet-stromversorgte Gerät über einen Ethernet-Anschluss der Ethernet-Stromversorgungseinrichtung mit der Ethernet-Stromversorgungseinrichtung verbunden ist.

## Revendications

1. Procédé d'alimentation électrique par câble Ethernet, comprenant :
la détermination, lorsque le mode d'alimentation d'un équipement fournissant une source d'énergie par Ethernet est un premier mode d'alimentation, d'un dispositif de puissance élevée alimenté par câble Ethernet et d'un dispositif de faible puissance alimenté par câble Ethernet parmi les dispositifs alimentés par câble Ethernet reliés à l'équipement fournissant une source d'énergie par Ethernet et dont l'énergie est fournie par l'équipement fournissant une source d'énergie par Ethernet, le dispositif de puissance élevée alimenté par câble Ethernet étant un dispositif alimenté par câble Ethernet dont l'exigence en puissance est supérieure à une valeur fixée, le dispositif de faible puissance alimenté par câble Ethernet étant un dispositif alimenté par câble Ethernet dont l'exigence en puissance est inférieure ou égale à la valeur fixée,
la fixation de la priorité d'alimentation du dispositif de puissance de alimenté par câble Ethernet à la priorité la plus basse, la priorité d'alimentation du dispositif de puissance élevée alimenté par câble Ethernet étant inférieure à la puissance la plus basse qui peut être réglée pour le dispositif de faible puissance alimenté par câble Ethernet,
la détermination, lorsqu'un nouveau dispositif alimenté par câble Ethernet est relié à l'équipement fournissant une source d'énergie par Ethernet, d'une priorité d'alimentation pour le nouveau dispositif alimenté par câble Ethernet en fonction du mode d'alimentation de l'équipement fournissant une source d'énergie par Ethernet et de l'exigence en puissance du nouveau dispositif alimenté par câble Ethernet, et
la détermination de ce que l'équipement fournissant une source d'énergie par Ethernet apporte de l'énergie au nouveau dispositif alimenté par câble Ethernet, en fonction de la puissance utilisée de l'équipement fournissant une source d'énergie par Ethernet, des priorités d'alimentation des dispositifs alimentés par câble Ethernet, de la priorité d'alimentation nouveau dispositif alimenté par câble Ethernet et de la puissance maximale en sortie de l'équipement fournissant une source d'énergie par Ethernet.

2. Procédé selon la revendication 1, dans lequel la détermination de ce que l'équipement fournissant une source d'énergie par Ethernet apporte de l'énergie au nouveau dispositif alimenté par câble Ethernet comprend :
l'acquisition de l'état de fonctionnement courant de l'équipement fournissant une source d'énergie par Ethernet en fonction de la puissance maximale de sortie de l'équipement fournissant une source d'énergie par Ethernet, d'un premier seuil de puissance prédéterminé et de la puissance utilisée de l'équipement fournissant une source d'énergie par Ethernet, et
lorsque l'état de fonctionnement courant est un état de charge élevée et si la priorité d'alimentation du nouveau dispositif alimenté par câble Ethernet est supérieure à la priorité d'alimentation du dispositif alimenté par câble Ethernet présentant la priorité la plus basse parmi les dispositifs alimentés par câble Ethernet, la détermination de ce que l'équipement fournissant une source d'énergie par Ethernet fournit de l'énergie au nouveau dispositif alimenté par câble Ethernet, et la détermination de ce que l'équipement fournissant une source d'énergie par Ethernet arrête la fourniture d'énergie au dispositif alimenté par câble Ethernet qui présente la priorité d'alimentation la plus basse parmi les dispositifs alimentés par câble Ethernet.

3. Procédé selon la revendication 1, dans lequel la détermination de ce que l'équipement fournissant une source d'énergie par Ethernet apporte de l'énergie au nouveau dispositif alimenté par câble Ethernet comprend :
l'acquisition de l'état de fonctionnement courant de l'équipement fournissant une source d'énergie par Ethernet en fonction de la puissance maximale en sortie de l'équipement fournissant une source d'énergie par Ethernet, d'un premier seuil de puissance prédéterminé et de la puissance utilisée de l'équipement fournissant une source d'énergie par Ethernet, et
lorsque l'état de fonctionnement courant est un état de surcharge, la détermination de ce que l'équipement fournissant une source d'énergie par Ethernet arrête la fourniture d'énergie au dispositif alimenté par câble Ethernet présentant la priorité d'alimentation la plus basse parmi les dispositifs alimentés par câble Ethernet, et l'interdiction de fourniture d'énergie à nouveau au dispositif alimenté par câble Ethernet dont la fourniture d'énergie est arrêtée.

4. Appareil d'alimentation électrique par câble Ethernet, comprenant un module de réglage et un module de détermination, dans lequel :
lorsque le mode d'alimentation d'un équipement fournissant une source d'énergie par Ethernet représente un premier mode d'alimentation,
le module de détermination est configuré pour définir un dispositif de puissance élevée alimenté par câble Ethernet et un dispositif de faible puissance alimenté par câble Ethernet parmi les dispositifs alimentés par câble Ethernet reliés à l'équipement fournissant une source d'énergie par Ethernet et dont la puissance est fournie par l'équipement fournissant une source d'énergie par Ethernet, le dispositif de puissance élevée alimenté par câble Ethernet étant un dispositif alimenté par câble Ethernet dont l'exigence en puissance est supérieure à une valeur fixée, le dispositif de faible puissance alimenté par câble Ethernet étant un dispositif alimenté par câble Ethernet dont l'exigence en puissance est inférieure ou égale à la valeur fixée,
le module de réglage est configuré pour fixer la priorité d'alimentation du dispositif de puissance élevée alimenté par câble Ethernet à la priorité la plus basse, la priorité d'alimentation du dispositif de puissance élevée alimenté par câble Ethernet étant inférieure à la puissance la plus basse qui peut être réglée pour le dispositif de faible puissance alimenté par câble Ethernet,
le module de fixation est en outre configuré pour déterminer, lorsqu'un nouveau dispositif alimenté par câble Ethernet est relié à l'équipement fournissant une source d'énergie par Ethernet, une priorité d'alimentation pour le nouveau dispositif alimenté par câble Ethernet en fonction du mode d'alimentation de l'équipement fournissant une source d'énergie par Ethernet et de l'exigence en puissance du nouveau dispositif alimenté par câble Ethernet, et
le module de détermination est en outre configuré pour définir si l'équipement fournissant une source d'énergie par Ethernet apporte de l'énergie au nouveau dispositif alimenté par câble Ethernet, en fonction de la puissance utilisée de l'équipement fournissant une source d'énergie par Ethernet, les priorités d'alimentation des dispositifs alimentés par câble Ethernet, la priorité d'alimentation nouveau dispositif alimenté par câble Ethernet et la puissance maximale en sortie de l'équipement fournissant une source d'énergie par Ethernet.

5. Appareil d'alimentation électrique par câble Ethernet selon la revendication 4, dans lequel :
le module de détermination est en particulier configuré pour acquérir l'état courant de fonctionnement de l'équipement fournissant une source d'énergie par Ethernet en fonction de la puissance maximale en sortie de l'équipement fournissant une source d'énergie par Ethernet, d'un premier seuil de puissance prédéterminé et de la puissance utilisée de l'équipement fournissant une source d'énergie par Ethernet ; et
lorsque l'état de fonctionnement courant est un état de charge élevée et si la priorité d'alimentation du nouveau dispositif alimenté par câble Ethernet est supérieure à la priorité d'alimentation du dispositif alimenté par câble Ethernet présentant la priorité d'alimentation la plus basse parmi les dispositifs alimentés par câble Ethernet, et configuré pour déterminer que l'équipement fournissant une source d'énergie par Ethernet arrête la fourniture d'énergie au dispositif alimenté par câble Ethernet présentant la priorité d'alimentation la plus basse parmi les dispositifs alimentés par câble Ethernet.

6. Appareil d'alimentation électrique par câble Ethernet selon la revendication 4, dans lequel :
le module de détermination est en particulier configuré pour acquérir l'état de fonctionnement courant de l'équipement fournissant une source d'énergie par Ethernet en fonction de la puissance maximale en sortie de l'équipement fournissant une source d'énergie par Ethernet, d'un premier seuil de puissance prédéterminé et de la puissance utilisée de l'équipement fournissant une source d'énergie par Ethernet ;
et lorsque l'état de fonctionnement courant est un état de surcharge, pour définir que l'équipement fournissant une source d'énergie par Ethernet arrête la fourniture d'énergie au dispositif alimenté par câble Ethernet présentant la priorité d'alimentation la plus basse parmi les dispositifs alimentés par câble Ethernet, et configuré pour interdire la fourniture d'énergie à nouveau au dispositif alimenté par câble Ethernet dont la fourniture d'énergie est arrêtée.

7. Équipement fournissant une source d'énergie par Ethernet, comprenant un port Ethernet, un circuit d'alimentation est un processeur, dans lequel :
le circuit d'alimentation est relié au port Ethernet,
le circuit d'alimentation est relié au processeur,
lorsque le mode d'alimentation de l'équipement fournissant une source d'énergie par Ethernet représente un premier mode d'alimentation,
le processeur définit un dispositif de puissance élevée alimenté par câble Ethernet et un dispositif de faible puissance alimenté par câble Ethernet parmi les dispositifs alimentés par câble Ethernet reliés à l'équipement fournissant une source d'énergie par Ethernet et dont la puissance est fournie par l'équipement fournissant une source d'énergie par Ethernet, le dispositif de puissance élevée alimenté par câble Ethernet étant un dispositif alimenté par câble Ethernet dont l'exigence en puissance est supérieure à une valeur fixée, le dispositif de faible puissance alimenté par câble Ethernet étant un dispositif alimenté par câble Ethernet dont l'exigence en puissance est inférieure ou égale à la valeur fixée,
le processeur fixe la priorité d'alimentation du dispositif de puissance élevée alimenté par câble Ethernet à la priorité la plus basse, la priorité d'alimentation du dispositif de puissance élevée alimenté par câble Ethernet étant inférieure à la puissance la plus basse qui peut être réglée pour le dispositif de faible puissance alimenté par câble Ethernet,
lorsqu'un nouveau dispositif alimenté par câble Ethernet est relié à l'équipement fournissant une source d'énergie par Ethernet, un circuit de test d'exigence en puissance détermine l'exigence en puissance du nouveau dispositif alimenté par câble Ethernet,
le processeur détermine une priorité d'alimentation pour le nouveau dispositif alimenté par câble Ethernet en fonction du mode d'alimentation de l'équipement fournissant une source d'énergie par Ethernet et de l'exigence en puissance du nouveau dispositif alimenté par câble Ethernet, et
le processeur détermine, en fonction de la puissance utilisée de l'équipement fournissant une source d'énergie par Ethernet, les priorités d'alimentation des dispositifs alimentés par câble Ethernet, la priorité d'alimentation nouveau dispositif alimenté par câble Ethernet et la puissance maximale en sortie de l'équipement fournissant une source d'énergie par Ethernet, si l'équipement fournissant une source d'énergie par Ethernet fournit de l'énergie au nouveau dispositif alimenté par câble Ethernet.

8. Équipement fournissant une source d'énergie par Ethernet selon la revendication 7, dans lequel l'équipement fournissant une source d'énergie par Ethernet comprend une clé de commutation de mode d'alimentation,
la clé de commutation de mode d'alimentation est reliée au processeur, et
la clé de commutation de mode d'alimentation est configurée pour basculer le mode d'alimentation de l'équipement fournissant une source d'énergie par Ethernet depuis un premier mode d'alimentation jusqu'à un second mode d'alimentation, et pour basculer le mode d'alimentation de l'équipement fournissant une source d'énergie par Ethernet depuis le second mode d'alimentation jusqu'au premier mode d'alimentation.

9. Équipement fournissant une source d'énergie par Ethernet selon la revendication 7 ou 8, dans lequel le processeur détermine si le circuit d'alimentation fournit de l'énergie au nouveau dispositif alimenté par câble Ethernet, ce qui comprend :
le processeur acquiert l'état courant de fonctionnement de l'équipement fournissant une source d'énergie par Ethernet en fonction de la puissance maximale en sortie de l'équipement fournissant une source d'énergie par Ethernet, d'un premier seuil de puissance prédéterminé et de la puissance utilisée de l'équipement fournissant une source d'énergie par Ethernet, et
lorsque l'état de fonctionnement courant est un état de charge élevée et si la priorité d'alimentation du nouveau dispositif alimenté par câble Ethernet est supérieure à la priorité d'alimentation du dispositif alimenté par câble Ethernet présentant la priorité la plus basse parmi les dispositifs alimentés par câble Ethernet, le processeur détermine que le circuit d'alimentation fournit de l'énergie au nouveau dispositif alimenté par câble Ethernet, et détermine que le circuit d'alimentation arrête la fourniture d'énergie au dispositif alimenté par câble Ethernet qui présente la priorité d'alimentation la plus basse parmi les dispositifs alimentés par câble Ethernet.

10. Équipement fournissant une source d'énergie par Ethernet selon la revendication 7 ou 8, dans lequel le processeur détermine si le circuit d'alimentation fournit de l'énergie au nouveau dispositif alimenté par câble Ethernet, ce qui comprend :
le processeur acquiert l'état de fonctionnement courant de l'équipement fournissant une source d'énergie par Ethernet en fonction de la puissance maximale de sortie de l'équipement fournissant une source d'énergie par Ethernet, d'un premier seuil de puissance prédéterminé et de la puissance utilisée de l'équipement fournissant une source d'énergie par Ethernet, et
lorsque l'état de fonctionnement courant est un état de surcharge, le processeur détermine que le circuit d'alimentation arrête la fourniture d'énergie au dispositif alimenté par câble Ethernet présentant la priorité d'alimentation la plus basse parmi les dispositifs alimentés par câble Ethernet, et interdit au circuit d'alimentation de fournir à nouveau de l'énergie au dispositif alimenté par câble Ethernet dont la fourniture d'énergie est arrêtée.

11. Système d'alimentation électrique par câble Ethernet, comprenant l'équipement fournissant une source d'énergie par Ethernet conforme à l'une quelconque des revendications 7 à 10 et un dispositif alimenté par câble Ethernet, dans lequel le dispositif alimenté par câble Ethernet est relié à l'équipement fournissant une source d'énergie par Ethernet par l'intermédiaire d'un port Ethernet de l'équipement fournissant une source d'énergie par Ethernet.
